# EUROPEAN PATENT APPLICATION

(11) **EP 4 617 848 A1**
(43) Date of publication of application: **17.09.2025**
(21) Application number: 25162964.8
(22) Date of filing: 11.03.2025
(51) Int. Cl.: G06F 3/12

(54) **NON-TRANSITORY COMPUTER-READABLE STORAGE MEDIUM, CONTROL METHOD, AND INFORMATION PROCESSING APPARATUS**

(30) Priority: 14.03.2024 JP 2024040045
(71) Applicant: CANON KABUSHIKI KAISHA, Tokyo 146-8501 (JP)
(72) Inventor: MATSUDA, Shoichi, Tokyo, 146-8501 (JP)
(74) Representative: Canon Europe Limited

(57) **Abstract**

A non-transitory computer-readable storage medium stores an application program which causes an information processing apparatus to perform a control method. The application program supports a standard driver which is able to generate print data printable by a plurality of printing apparatuses supplied from a plurality of manufacturers. The control method includes storing a collection of set values for print settings items, displaying a print settings screen that allows selection of the collection, receiving selection of the collection by the user, and applying the set values for the print settings items included in the selected collection on the print settings screen. The collection is displayed on the print settings screen using different display methods depending on whether the set values for the print settings items included in the collection include any set value that is not implementable by a printing apparatus associated with the print settings screen.

## Description

### BACKGROUND OF THE INVENTION

### Field of the Invention

The present invention relates to a non-transitory computer-readable storage medium, a control method, and an information processing apparatus.

### Description of the Related Art

Several known configurations provide print instructions to printing apparatuses connected to host computers by using printer drivers installed on the host computers as software for controlling the printing apparatuses. Operating systems (OSs), which are fundamental software, are installed on the host computers. The printer drivers are configured according to the specifications prescribed by the OSs and operate when invoked by the OSs. Printing apparatus vendors provide a means to send instructions for printing to the printing apparatuses using the OSs by supplying printer drivers that conform to the operating systems' specifications.

In recent years, Windows (registered trademark) has provided standard class drivers (hereinafter also referred to as "standard drivers") that are compatible with printing apparatuses supplied from multiple vendors. Such standard drivers are included in operating system packages and can be readily used by connecting given printing apparatuses to the host computers. These standard drivers eliminate the need to separately install model-specific printer drivers suitable for printing apparatuses, providing greater convenience in use.

The standard drivers are configured to specify print functions based on PrintCapabilities generated from information obtained from the connected printing apparatuses. As a result, the users who use the standard drivers can specify print functions that align with the capabilities of the connected printing apparatuses using a single standard driver.

The standard drivers can be associated with applications that extend or support functionalities (hereinafter also referred to as "extension applications"). Printing apparatus vendors can provide extension applications. Vendors (manufacturers) can provide functions (extension functions) that cannot be achieved with standard drivers alone by providing these extension applications.

Japanese Patent Laid-Open No. 2015-176354 discloses a technology for sharing preferences presets that are combinations of print settings stored across multiple print settings screens. The sharing method described in Japanese Patent Laid-Open No. 2015-176354 applies only to identical printing apparatuses and cannot be used to share preferences presets across different printing apparatuses.

### SUMMARY OF THE INVENTION

The present invention in its first aspect provides a control method as specified in claims 1 to 12. The present invention in its second aspect provides a non-transitory computer-readable storage medium as specified in claim 13. The present invention in its third aspect provides an information processing apparatus as specified in claim 14.

Further features of the present invention will become apparent from the following description of embodiments with reference to the attached drawings.

### BRIEF DESCRIPTION OF THE DRAWINGS

Fig. 1 is a block diagram illustrating a hardware configuration of a printing system.
Figs. 2A and 2B are configuration diagrams of the printing system.
Figs. 3A, 3B, and 3C illustrate examples of a print settings screen of an extension application.
Figs. 4A and 4B provide an example of Print Device Capabilities (PDC) and PrintTicket (PT).
Figs. 5A, 5B, 5C, 5D, 5E, 5F, and 5G provide examples of preferences management data.
Figs. 6A, 6B, and 6C illustrate examples of a preferences addition screen of the extension application.
Figs. 7A and 7B illustrate a preferences registration process flow of the extension application.
Fig. 8 provides an example of PT.
Figs. 9A, 9B, and 9C illustrate examples of a print settings screen of the extension application associated with a printer B.
Figs. 10A and 10B provide an example of PDC and PT of the printer B.
Fig. 11 illustrates a preferences list display process flow of the print settings screen of the extension application.
Fig. 12 illustrates a preferences selection process flow of the print settings screen of the extension application.
Fig. 13 illustrates an example of a preferences application confirmation screen of the extension application.
Figs. 14A and 14B illustrate examples of a preferences edit screen of the extension application.
Fig. 15 illustrates a preferences list display process flow of the preferences edit screen of the extension application.
Fig. 16 illustrates a preferences preset display process flow of the preferences edit screen of the extension application.
Fig. 17 illustrates a print settings screen activation process flow of an extension application according to a second embodiment.
Figs. 18A and 18B provide examples of preferences support management data of the extension application according to the second embodiment.
Fig. 19 illustrates an example of a preferences selection screen of the extension application according to the second embodiment.
Figs. 20A and 20B illustrate examples of a print settings screen of the extension application according to the second embodiment.
Fig. 21 illustrates a preferences list display process flow of the print settings screen of the extension application according to the second embodiment.
Fig. 22 illustrates a preferences registration process flow of an extension application according to a third embodiment.
Fig. 23 illustrates a preferences list display process flow of a print settings screen of the extension application according to the third embodiment.
Figs. 24A, 24B, and 24C illustrate examples of the print settings screen of the extension application according to the third embodiment.
Figs. 25A and 25B are configuration diagrams of a printing system according to a fourth embodiment.
Figs. 26A and 26B illustrate examples of a print settings screen of an extension application according to the fourth embodiment.
Figs. 27A, 27B, and 27C illustrate examples of a preferences edit screen of the extension application according to the fourth embodiment.
Fig. 28 illustrates a preferences file import process flow of the extension application according to the fourth embodiment.
Fig. 29 illustrates an example of the print settings screen after importing a preferences file of the extension application according to the fourth embodiment.

### DESCRIPTION OF THE EMBODIMENTS

Hereinafter, embodiments of the present invention are described in detail with reference to the accompanying drawings. The embodiments described herein are not intended to limit the invention as defined by the claims. Furthermore, not all combinations of features described in the embodiments are essential to the solution of the invention. Each of the embodiments of the present invention described below can be implemented solely or as a combination of a plurality of the embodiments of features thereof where necessary or where the combination of elements or features from individual embodiments in a single embodiment is beneficial. The same constituent elements are assigned the same reference numerals, and descriptions thereof are omitted.

### First embodiment

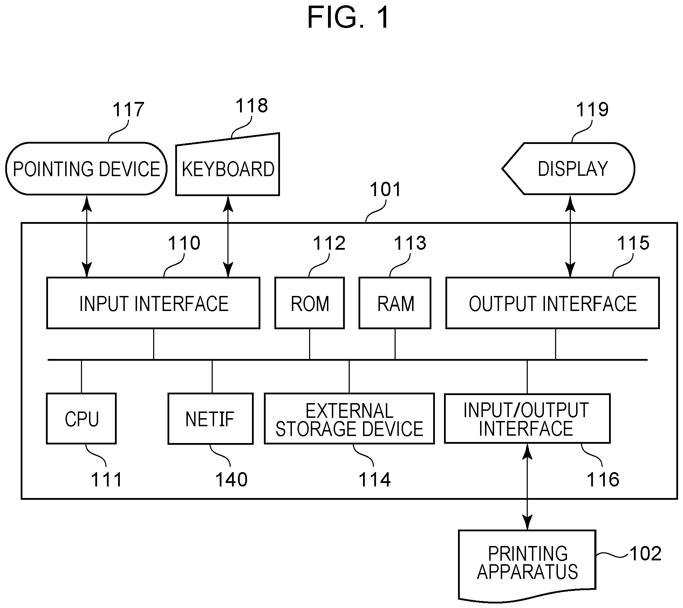

Fig. 1 is a block diagram illustrating a hardware configuration of a printing system. In this drawing, a host computer 101 is an example of an information processing apparatus. The host computer 101 includes an input interface 110, a central processing unit (CPU) 111, a read-only memory (ROM) 112, a random-access memory (RAM) 113, an external storage device 114, an output interface 115, and an input/output interface 116.

Input devices such as a keyboard 118 and a pointing device 117 are connected to the input interface 110. Display devices such as a display 119 is connected to the output interface 115. A NETIF 120 is a network interface. The NETIF 120 is operable to control data transfer to and from external devices through networks.

The ROM 112 stores an initialization program. The external storage device 114 stores a collection of application programs, an operating system (OS), print data generation software, and other various kinds of data. The RAM 113 is used as work memory or for similar purposes to execute various programs stored in the external storage device 114, enabling the various programs to operate on the host computer 101.

In the present embodiment, the functions of the host computer 101, as described later, are implemented, and the operations following the flowcharts described later are performed on the host computer 101 by the CPU 111 executing processes according to the procedures in the programs stored in the ROM 112. A printing apparatus 102, which is a device, is connected to the host computer 101 via the input/output interface 116.

The host computer 101 and the printing apparatus 102 are implemented separately; however the host computer 101 and the printing apparatus 102 may be configured as a single information processing apparatus. The host computer 101 may be, for example, a desktop personal computer, smartphone, or laptop computer.

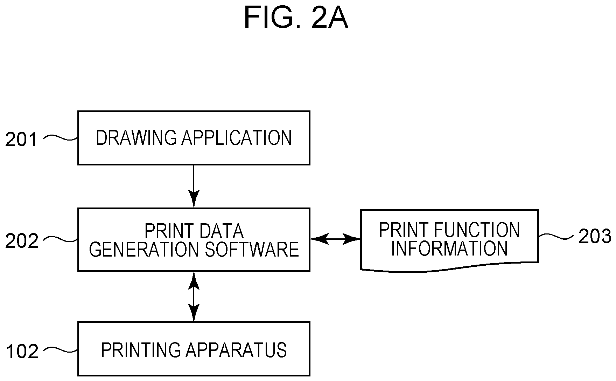

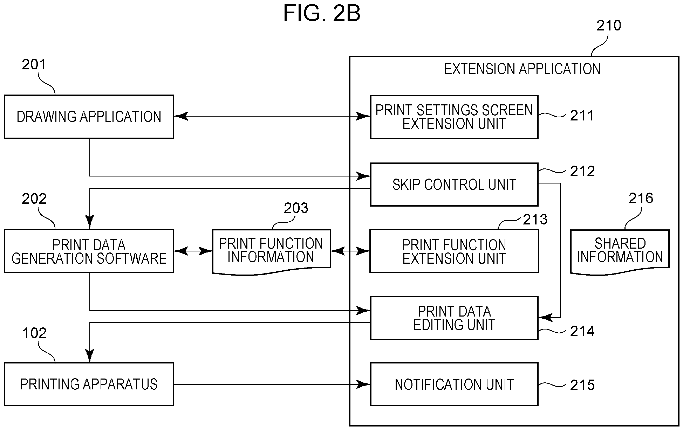

Figs. 2A and 2B schematically illustrate the configurations of a printing system. The following description is based on the assumption that the printing system uses the host computer 101 with Microsoft (registered trademark) Windows (registered trademark) 11 installed as the OS. Fig. 2A illustrates a general configuration when print data generation software 202 and the printing apparatus 102 are not associated with an extension application 210.

A drawing application 201 is a software application that creates content (drawing data) to be printed and outputs images to be printed. For example, the drawing application 201 corresponds to a document creation application or a spreadsheet application.

When the drawing application 201 receives a print request from the user, the drawing application 201 issues a print instruction to the OS. The print instruction includes print setting information for directing the operations of the print data generation software 202 and the printing apparatus 102. The print setting information is also referred to as "PrintTicket" (hereinafter referred to as "PT").

The drawing application 201 is capable of displaying a print settings screen provided by the print data generation software 202, the OS, or the drawing application 201 to output the print setting information. The print settings screen includes setting items (hereinafter also referred to as "control items") that represent configurable print functions, and control items that indicate set values of the setting items, based on capability information (i.e. information configurable as print settings) obtained from the print data generation software 202.

The capability information is also referred to as "PrintCapabilities" (hereinafter referred to as "PC").

The print data generation software 202 determines the PC based on print function information 203.

The print function information 203 is data that specifies print functions, indicating all configurable print functions, the set values of the print functions, and the mutually exclusive relationships between set values.

The print function information 203 is also referred to as Print Device Capabilities (PDC). The print function information 203 is included in the configuration file of the print data generation software 202 and is stored in the external storage device 114 as an unchangeable file. Alternatively, the print function information 203 may be dynamically generated by the print data generation software 202. Specifically, the print data generation software 202 or the OS may be configured to obtain printing apparatus attribute data from the printing apparatus 102 and generate the print function information 203 based on attribute information in the obtained attribute data.

When the print function information 203 is generated dynamically, the generated print function information 203 is editable. The printing apparatus attribute data obtainable from the printing apparatus 102 corresponds to the response received upon issuing a Get-Printer-Attributes operation of the Internet Print Protocol (IPP) to the printing apparatus. The response includes attribute information indicating the functions (capabilities of the printing apparatus) that can be selected on the printing apparatus 102 and the set values associated with the attribute information. The RAM 113 can store this response.

The print data generation software 202 is configured in this manner to enable users to designate specific print functions available in various printing apparatuses 102 for each printing apparatus 102. In other words, the print data generation software 202 is configured to enable users to designate specific print functions for the connected printing apparatus, regardless of differences in functionality among connected printing apparatuses or differences in printing apparatuses, for example, developed or supplied by different vendors (manufacturers).

In this description, a configuration using the IPP Class Driver installed in Windows (registered trademark) 11 as the print data generation software 202 is described. The IPP Class Driver is a printer driver that performs printing operations according to the specifications of a standard printing protocol referred to as the Internet Print Protocol (IPP). This printer driver is included in the OS package. It will be appreciated that the IPP Class Driver is an example of a printer driver that may be used in the context of the invention, and that the invention may be applied to other suitable drivers.

The IPP Class Driver is not a printer driver specific to a particular model of the printing apparatus 102, but rather a standard class driver that can be commonly used across printing apparatuses supplied from multiple vendors (manufacturers). The IPP Class Driver obtains capability information of the connected printing apparatus 102 and generates the print function information 203 based on the information, enabling users to designate print functions supported by the connected printing apparatus 102.

As described above, the print functions of the host computer 101 are provided by the print data generation software 202 and the OS. The print data generation software 202 and the OS are an example of software of the present invention that generates print data printable by printing apparatuses supplied from multiple vendors (manufacturers).

Fig. 2B illustrates a configuration when the print data generation software 202 and the printing apparatus 102 are associated with an extension application 210. The configuration features and operations not specifically mentioned below are substantially identical to the configurational features and operations in Fig. 2A.

The extension application 210 is software for extending and supporting the functionality of the print data generation software 202. The extension application 210 is software not pre-included in (not included in the package with) the OS. The user thus needs to download the extension application 210 from a server through the Internet and install the extension application 210 by operating the host computer 101. Alternatively, the extension application 210 may be automatically installed when the printing apparatus 102 connects to the host computer 101.

Specifically, when the printing apparatus 102 connects to the host computer 101, the OS obtains device identification information from the printing apparatus 102. The OS may download an extension application 210 corresponding to the obtained device identification information from the server through the Internet and install the extension application 210. This indicates that the print data generation software 202 and the extension application 210 are stored as separate files on the host computer 101.

When the extension application 210 is installed while the printing apparatus 102 and the print data generation software 202 are associated as illustrated in Fig. 2A, the OS associates the extension application 210 with the print data generation software 202. The OS also associates the extension application 210 with the printing apparatus 102. This process results in the software configuration of the host computer 101 illustrated in Fig. 2B.

The print data generation software 202 and the extension application 210 may be updated and upgraded. This update process is also performed at separate times. In other words, the time when the host computer 101 obtains the print data generation software 202 differs from the time when the host computer 101 obtains the extension application 210. The trigger that prompts the host computer 101 to obtain the print data generation software 202 also differs from the trigger that prompts the host computer 101 to obtain the extension application 210.

The extension application 210 described in the present embodiment includes a print settings screen extension unit 211, a skip control unit 212, a print function extension unit 213, a print data editing unit 214 and a notification unit 215. The extension application 210 also includes shared information 210 accessible by each unit in a shared manner. The shared information 210 is a file stored in the external storage device 114 or information stored in the RAM 113. The extension application 210 writes information to and reads information from the shared information 210 using an application programming interface (API) provided by the OS.

The extension application 210 may terminate the operation each time the individual unit completes the operation. In this case, the OS activates the extension application 210 each time the OS receives a request to use the individual unit. Another possible approach is that, for example, when the operation of the print settings screen extension unit 211 completes, the OS may terminate the operation of the extension application 210; however, when the operation of the skip control unit 212 completes, the OS may allow the extension application 210 to remain active.

The extension application 210 may cancel the operation of the individual unit that is running. When the operation is cancelled, the OS deletes the in-progress job on a print queue.

When the drawing application 201 receives a print request from the user, the drawing application 201 issues a print instruction to the OS. Also with this configuration, the drawing application 201 can display a print settings screen as in the configuration in Fig. 2A. In this configuration, a print settings screen provided by the extension application 210 is displayed. Specifically, a print settings screen provided by the print settings screen extension unit 211 included in the extension application 210 is displayed. Whether the print settings screen provided by the print settings screen extension unit 211 is displayed depends on the user's operation.

When the drawing application 201 receives a print request from the user and issues a print instruction to the OS, the OS activates the skip control unit 212. The skip control unit 212 controls whether to skip the operation of the print data generation software 202. Following the skip control operation by the skip control unit 212, the OS generates intermediate data based on the print instruction that is output from the drawing application 201 and passes the intermediate data to the print data generation software 202.

When the skip control unit 212 does not perform skip control, the print data generation software 202 processes intermediate data into print data interpretable by the printing apparatus 102 and passes the intermediate data to the print data editing unit 214. When the print data generation software 202 is skipped, the intermediate data is not processed by the print data generation software 202 but is passed to the print data editing unit 214. As such, the print data editing unit 214 can process intermediate data.

The print data editing unit 214 edits the intermediate data passed from the print data generation software 202 or the print data processed by the print data generation software 202. As the editing content, taking layout printing as an example, the print data editing unit 214 modifies the layout of the intermediate data or print data based on the print setting information for layout printing received from the OS.

The print data editing unit 214 can display a user interface (UI) screen on the display 119, in which the print data editing unit 214 can display the layout result of the intermediate data or print data as a preview screen. The print data editing unit 214 does not transmit the print data to the printing apparatus 102 while the screen is open; the print data transmission operation is initiated by closing the screen.

After the print data editing unit 214 edits the print data, the print data is passed to the printing apparatus 102. The printing apparatus 102 prints on paper based on the received print data.

When the print data generation software 202 is skipped by the skip control unit 212, the print data editing unit 214 may convert the received intermediate data into print data interpretable by the printing apparatus 102. A function provided by the OS may be used to convert the intermediate data into print data.

The extension application 210 includes the print function extension unit 213. The print function extension unit 213 is capable of editing the print function information 203 (i.e. PDC) generated by the print data generation software 202 or the OS.

This capability allows the print function extension unit 213 to add functions provided by the extension application 210. The print function extension unit 213 is also able to, for example, add functions supported by the printing apparatus 102 but not by the print data generation software 202 and add mutually exclusive relationships between the set values for the print functions. The OS activates the print function extension unit 213 when the extension application 210 is first associated with the printing apparatus 102 and the print data generation software 202.

The OS may activate the print function extension unit 213 at other times, such as when the OS is started. In cases in which optional devices (for example, a finisher) are later added to the printing apparatus 102, extending the printing-related functions, the print function extension unit 213 can detect the extension function and add the extension function to the print function information 203.

The extension application 210 also includes the notification unit 215. The notification unit 215 is capable of displaying a notification for the user in response to errors occurring in the printing apparatus 102. For example, when a "no paper" error occurs in the printing apparatus 102, the print data software 202 detects the error, and the OS causes the display 119 to display a message using a notification function referred to as toast notification, which is a function of the OS.

When the user presses this toast notification, the OS invokes the notification unit 215 of the extension application 210, and a UI screen of the notification unit 215 is displayed. The UI screen of the notification unit 215 can display, for example, detailed messages regarding a "no paper" error or methods for refilling paper.

Once the extension application 210 transmits print data to the printing apparatus 102, the extension application 210 is no longer able to display screens such as guides related to print data during the operations of the individual units.

The configuration of the extension application 210 for implementing the present embodiment is not limited to the configuration including all the functions (units) described above; the configuration of the extension application 210 may include only one or some of these functions or include other additional functions. The extension application 210 is sometimes referred to simply as printing software.

### Display of print settings screen

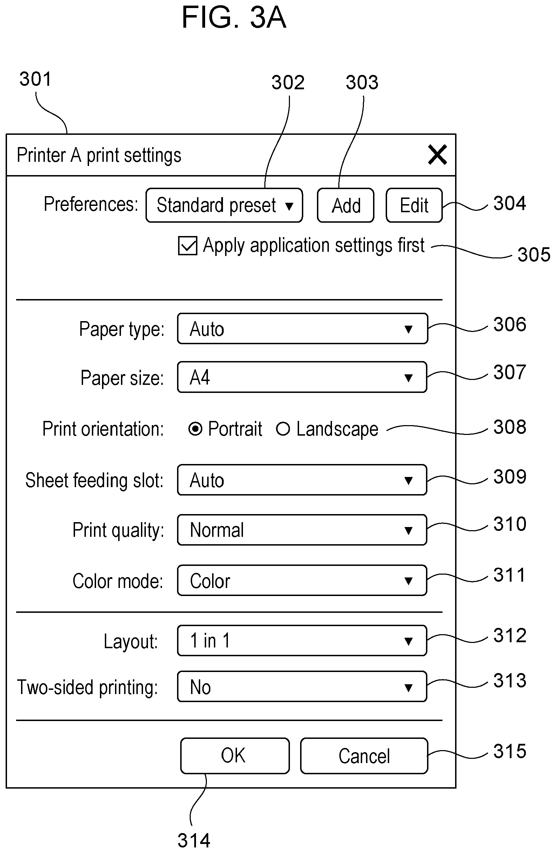

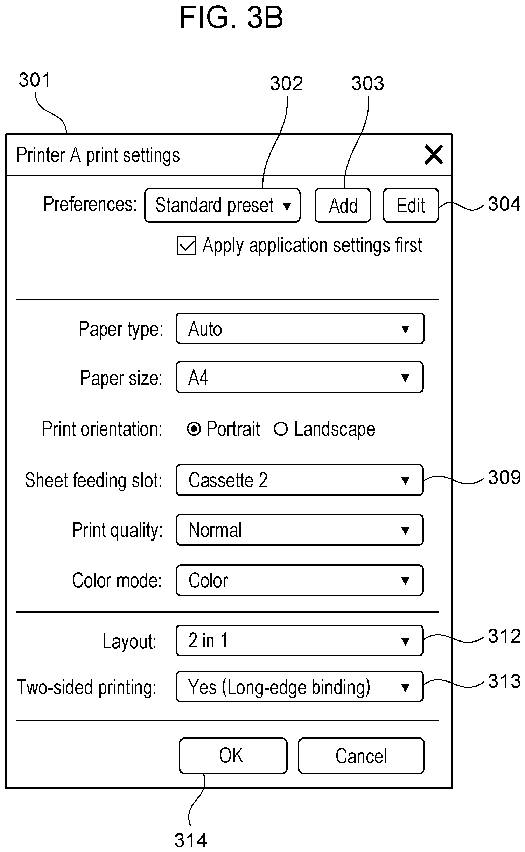

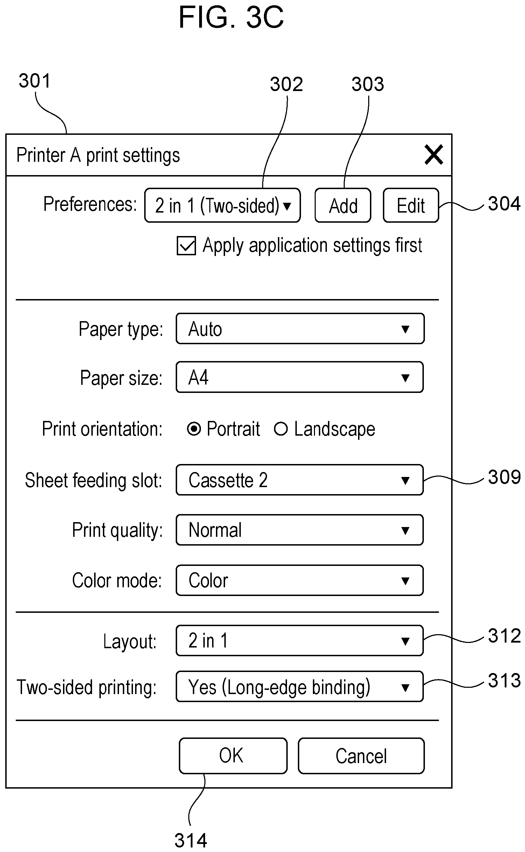

Figs. 3A, 3B, and 3C illustrate examples of a screen displayed by the print settings screen extension unit 211 when a printer A is connected as the printing apparatus 102. The OS invokes the print settings screen extension unit 211 when the user provides an instruction in the drawing application 201 to display the print settings screen for the printer A. The print settings screen extension unit 211 displays a screen on which the user can select the print function set values selectable in the print data generation software 202, based on the printer A's PC obtained from the OS.

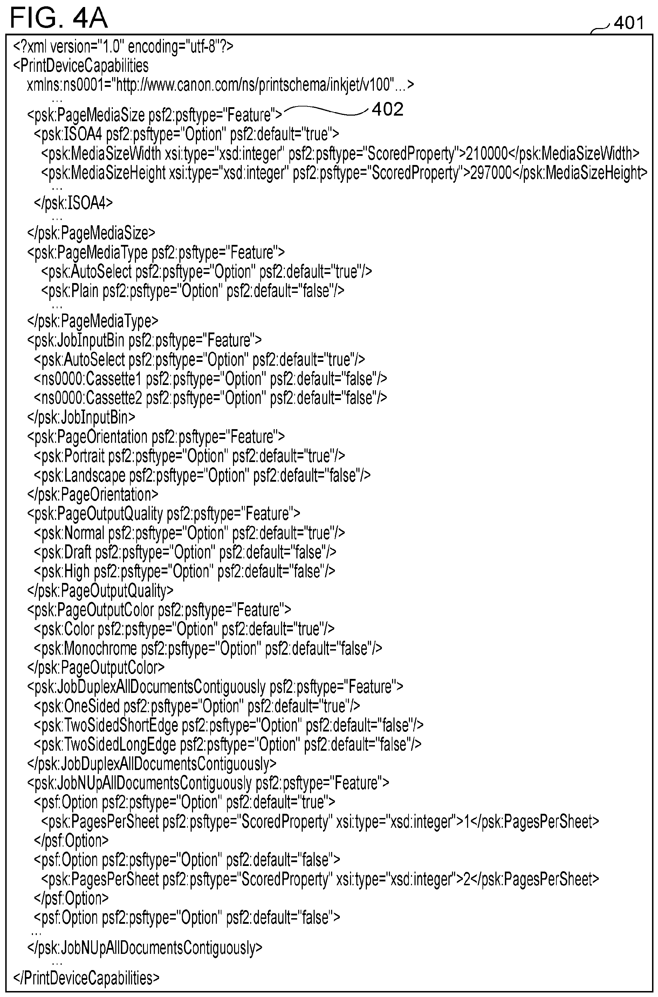

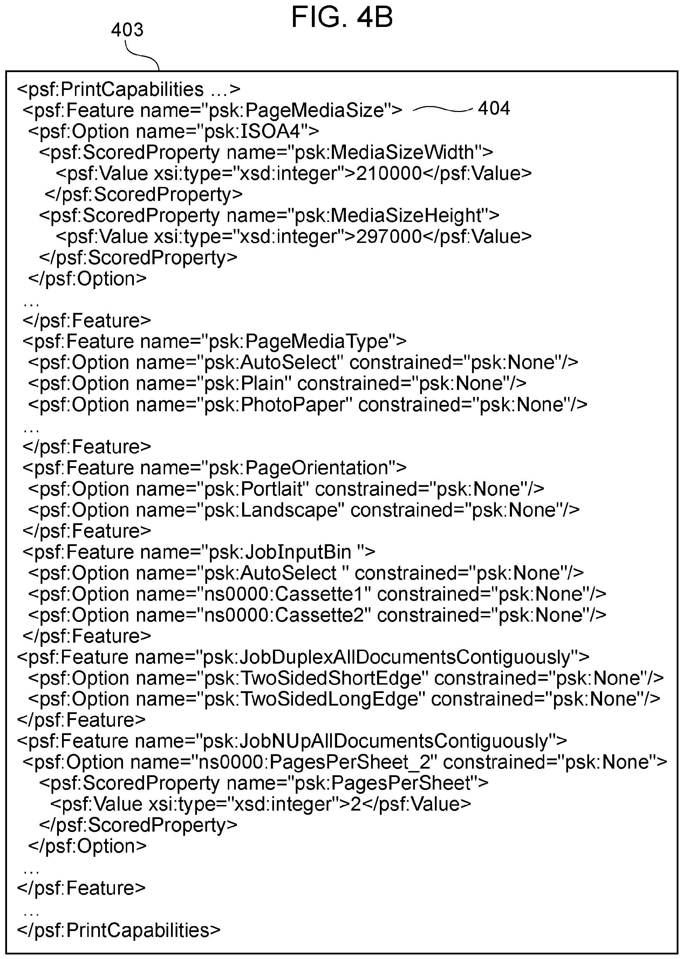

The PC is generated by the OS based on the PDC. An example of the printer A's PDC is presented as PDC 401 in Fig. 4A, and an example of the printer A's PC is presented as PC 403 in Fig. 4B. The information psftype="Feature" in the PDC 401 represents a function supported by the printing apparatus. The information PageMediaSize 402 indicates that the paper size function is configurable. The field psftype="Option" indicates a set value configurable for an individual function, specifying, for example, that ISOA4 size can be set as the paper size (PageMediaSize 402).

ScoredProperty in each set value (Option) specifies a particular parameter of the set value. For example, the paper size (PageMediaSize 402) includes information on the width (MediaSizeWidth) and height (MediaSizeHeight) of the individual size. The PC 403 is generated based on the PDC 401; the information PageMediaSize 402 of the PDC 401 is generated as PageMediaSize 404 of the PC 403, and individual set values such as ISOA4 are also generated.

Fig. 3A illustrates the state immediately after the print settings screen 301 is displayed in response to a user's instruction, in which various print settings are configured as default settings. Preferences 302 indicates a field for selecting a preferences preset that is a combination of specific print set values. When a preferences preset is selected, the combination of print set values stored in that preferences preset is applied to the print settings screen.

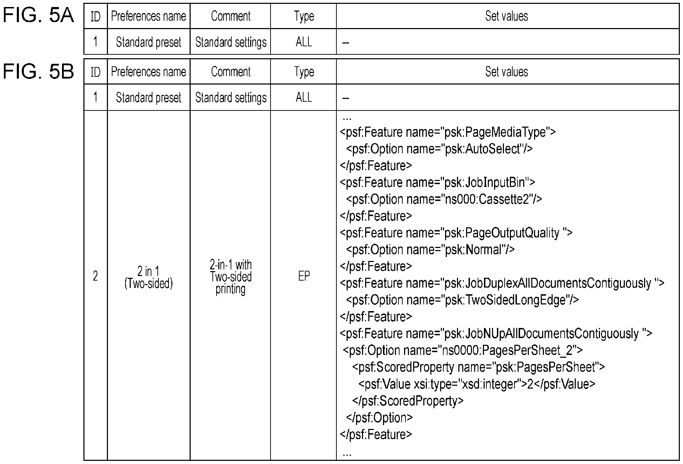

When the OS installs the extension application 201, the extension application 201 stores a preferences preset in the shared information 216 as the standard preset. The preferences preset as the standard preset resets the set values to the values immediately after installation. Fig. 5A illustrates an example of preferences preset management data stored in the shared information 216 by the extension application 201. Fig. 5A illustrates the state immediately after the extension application 201 is installed, in which only the standard preset is registered.

As the preferences preset management data, an identification (ID) for management, a registered preferences name, a comment, the type of printing apparatus for which the preferences are stored, and set values stored as a preferences preset are stored in an associated manner. The information stored as management data may include other kinds of information in these information items.

Since the standard preset is a preferences preset common to all models, information labeled as ALL is stored to indicate that the standard preset is usable for all types of printing apparatuses. Since the standard preset is the preferences preset used to reset the set values to the default values immediately after installation, specific values are not stored as the set values. Instead, the default values of the individual settings (default = "true" for Option in Fig. 4A) written in the PDC are retrieved and applied. In the description of the present embodiment, only the standard preset is registered (preinstalled) as a preferences preset when the extension application 201 is installed; however, other combinations of set values may be registered in advance.

The comment is intended to convey to the user, in a text string, the type of set value combination. In the present embodiment, the comment is used to be displayed in comment 1504 in a preferences edit screen 1501, which will be described later.

An add button 303 is a button for storing the currently set combination of print settings as a preferences preset. An edit button 304 is a button for editing the stored preferences preset.

A checkbox 305 labeled "Apply application settings first" provides a function to prioritize application settings when the preferences preset is applied, provided the checkbox is checked.

Specifically, the checkbox 305 provides a function to prevent the preferences preset from being applied for specific print settings, such as paper size and print orientation, which are configurable without the user opening the print settings screen for the printer A through the drawing application 201.

Paper type 306, paper size 307, print orientation 308, sheet feeding slot 309, print quality 310, color mode 311, layout 312, and two-sided printing 313 specify various options supported by the printing apparatus based on the PC obtainable from the OS. The user can set print settings by selecting options from the displayed options.

An OK button 314 is a button for storing various currently selected set values in print settings (PT) and closing the print settings screen 301. The cancel button 315 is a button for closing the print settings screen 301 without storing print settings.

### Storage of preferences preset

Next, an example of saving a preferences preset is described.

Fig. 3B illustrates the state in which the user has changed the sheet feeding slot 309 to Cassette 2, the layout 312 to 2 in 1, and the double-sided printing 313 to Yes (long-edge binding) from the state in Fig. 3A. When the user desires to save the combination of set values in this state as a preferences preset, the user presses the add button 303 in preferences. When the add button 303 in preferences is pressed, a preferences addition screen is displayed.

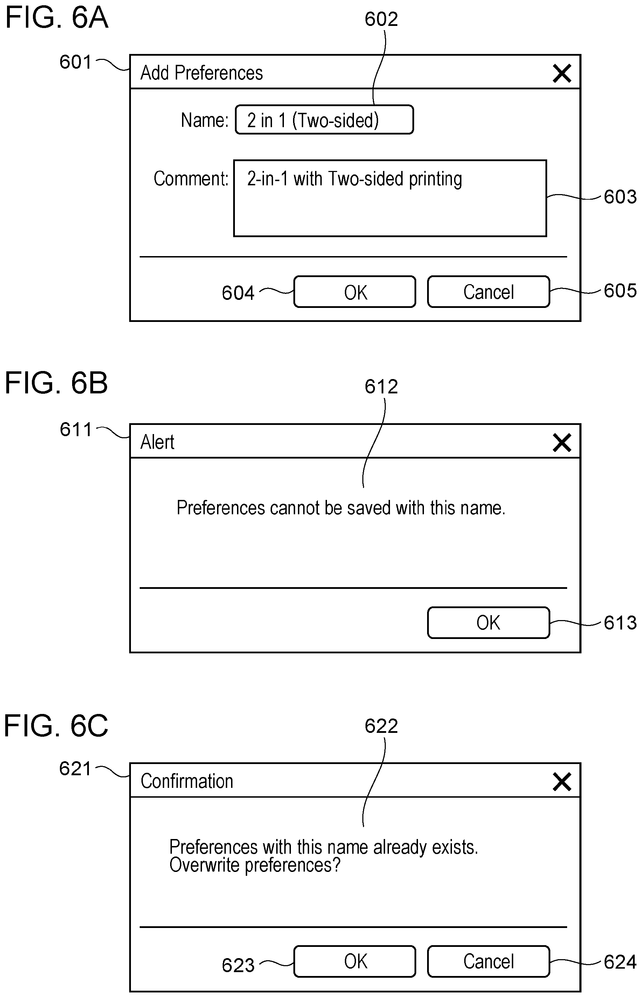

Fig. 6A illustrates an example of a preferences addition screen displayed when the add button 303 in preferences is pressed. On the preferences addition screen 601 illustrated in Fig. 6A, the user inputs a name of the preferences preset (preferences name) in name 602 and text in comment 603. By pressing the OK button 604, the combination of set values of print settings when the add button 303 in preferences is pressed is stored as a preferences preset.

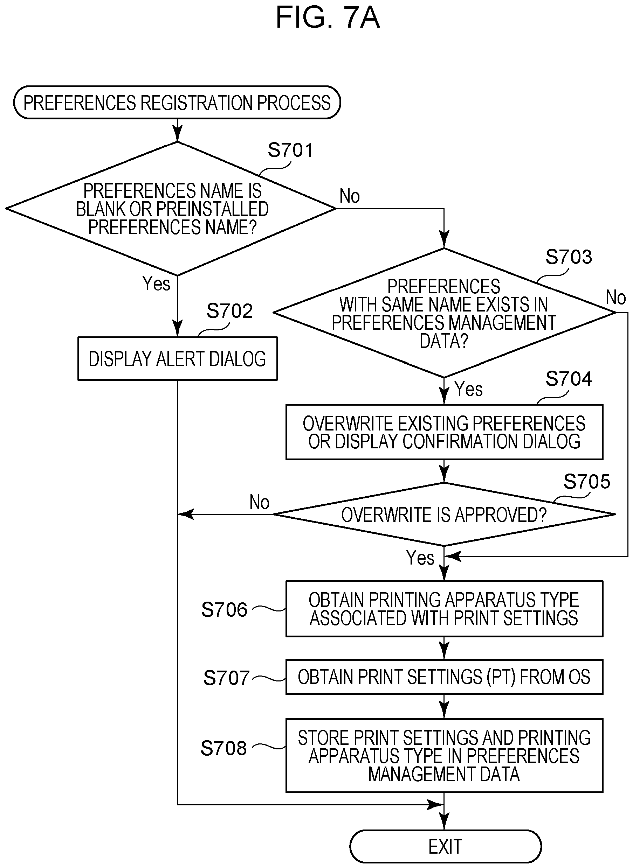

Fig. 7A illustrates a process flow executed when the user presses the OK button 604.

When the user presses the OK button 604, the print settings screen extension unit 211 performs the operation in S701. In S701, the print settings screen extension unit 211 checks the preferences name inputted in the name 602 in the preferences addition screen 601 to determine whether the name 602 is blank with no input or matches the name of a preinstalled preferences preset. When the name 602 is blank or matches the name "standard preset", which is the preinstalled preferences preset, the print settings screen extension unit 211 displays an alert dialog box in S702 and ends the process.

Fig. 6B illustrates an example of an alert dialog box displayed by the print settings screen extension unit 211 in S702. An alert dialog box 611 includes a message 612 that indicates that preferences cannot be stored with the input name and a button 613 for closing the alert dialog box 611. When the user presses the button 613, the print settings screen extension unit 211 closes the alert dialog box 611 and returns to the preferences addition screen 601.

When in S701 the print settings screen extension unit 211 determines that the name 602 is not blank and is different from the name of the standard preset, which is a preinstalled preferences preset, the print settings screen extension unit 211 proceeds to S703.

In S703, the print settings screen extension unit 211 checks whether the preferences name that is input in the name 602 of the preferences addition screen 601 exists in preferences management data stored in the shared information 216. When it is determined in S703 that the same name exists, the print settings screen extension unit 211 displays a confirmation dialog box to confirm whether to overwrite the existing preferences preset of the same name in S704.

Fig. 6C illustrates an example of a confirmation dialog box displayed in S704. The confirmation dialog box 621 includes a message 622 to confirm whether to overwrite the preferences preset with the same name, an OK button 623 that provides an instruction to overwrite the preferences preset with the same name, and a cancel button 624 that does not provide an instruction to overwrite the preferences preset with the same name.

When the user presses the OK button 623 on the confirmation dialog box 621, the print settings screen extension unit 211 determines Yes in S705 and proceeds to the operation in S706. When the user presses the cancel button 624 on the confirmation dialog box 621, the print settings screen extension unit 211 closes the confirmation dialog box 621, determines No in S705, ends the process, and returns to the preferences addition screen 601.

When no preferences with the same name exist in the preferences management data (No in S703) or when preferences with the same name exists in the preferences management data and an instruction to overwrite is provided (Yes in S705), the print settings screen extension unit 211 proceeds to S706.

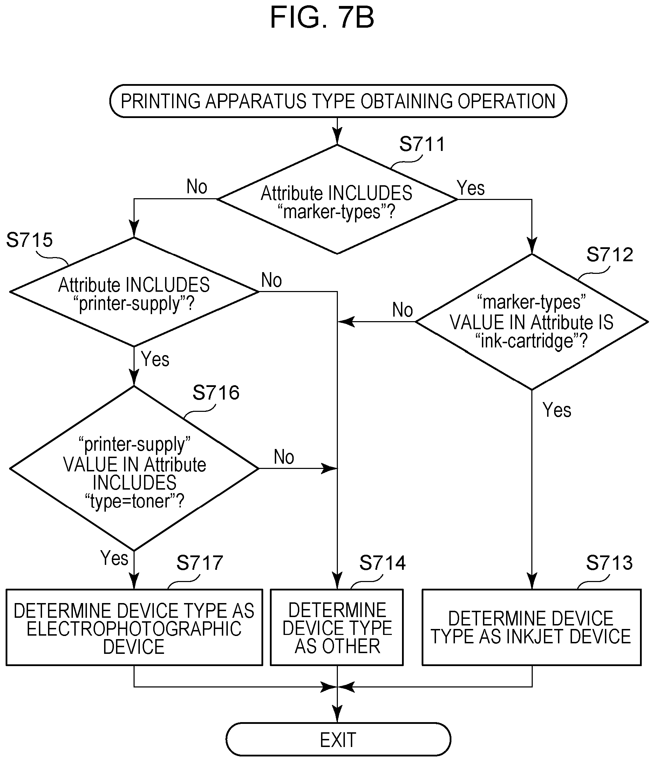

In S706, the print settings screen extension unit 211 obtains the type of printing apparatus associated with the currently opened print settings screen. The operation for identifying the type of printing apparatus is detailed in Fig. 7B.

Fig. 7B is a flowchart illustrating the detailed flow of the operation in S706 performed by the print settings screen extension unit 211. The flow in Fig. 7B is based on the assumption that the information obtained in S706 is provided in the response from the printing apparatus 102 to the IPP Get-Printer-Attributes operation. However, the flow in Fig. 7B may identify the device type using information obtained through other methods.

In S711, the print settings screen extension unit 211 checks whether the response from the printing apparatus 102 to the IPP Get-Printer-Attributes operation includes the marker-types attribute.

When the determination in S711 is Yes, the print settings screen extension unit 211 checks whether the value of the marker-types attribute is ink-cartridge in S712.

When the determination in S712 is Yes, the print settings screen extension unit 211 determines in S713 that the device type of the printing apparatus 102 is an inkjet device (IJ). The marker-types attribute and the ink-cartridge attribute value are attributes and attribute values defined in IPP.

When the determination in S711 is No, the print settings screen extension unit 211 checks in S715 whether the response from the printing apparatus 102 to the IPP Get-Printer-Attributes operation includes the printer-supply attribute. The printer-supply attribute is an attribute defined in IPP.

When the determination in S715 is Yes, the print settings screen extension unit 211 checks in S716 whether the value of the printer-supply attribute includes type=toner.

When the determination in S716 is Yes, the print settings screen extension unit 211 determines in S717 that the device type of the printing apparatus 102 is an electrophotographic device (EP). The printer-supply attribute and the type=toner attribute value are attributes and attribute values defined in IPP.

When the print settings screen extension unit 211 determines No in S712, S715, or S716, the print settings screen extension unit 211 determines the device type of the printing apparatus 102 as other in S714.

In Fig. 7B, the print settings screen extension unit 211 determines the device type based on the information provided in the response from the printing apparatus 102 to the IPP Get-Printer-Attributes operation. However, the print settings screen extension unit 211 may provide a determination based on other information. For example, the device type may be determined based on information obtained from the printing apparatus 102 using other methods.

The device type may be determined based on information obtained from the printing apparatus 102 such as the name of the printing apparatus 102 and supported settings, as well as table information held by the extension application 204. The table information may be obtained from a server that is not illustrated. The device type is represented as EP or IJ. However, printer uses such as home printers, office printers, and photo printers may be identified as the device type based on the supported function information.

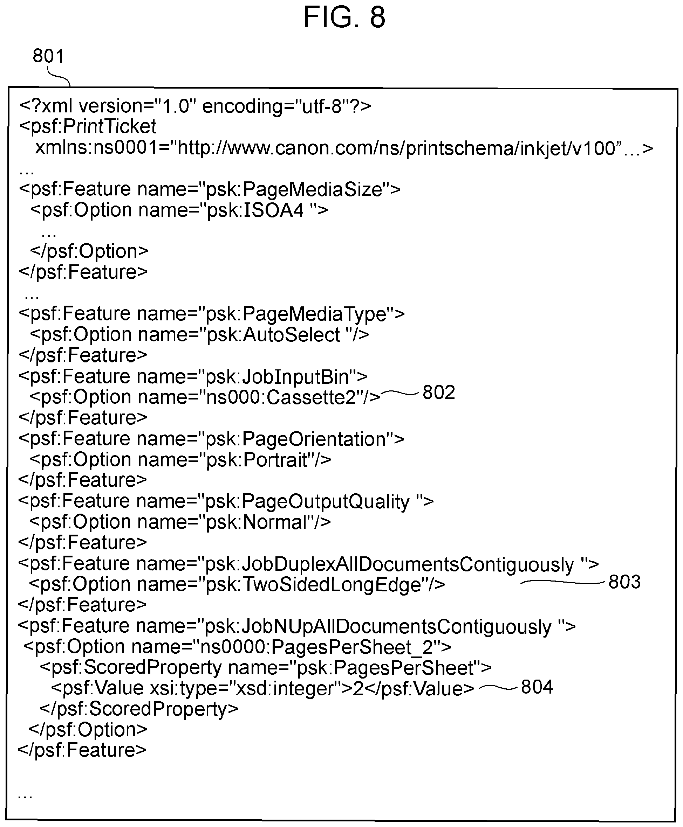

Returning to the description of the flow in Fig. 7A, in S707, the print settings screen extension unit 211 next obtains the current print settings (PT) from the OS. Fig. 8 illustrates an example of the PT obtained in S707.

PT 801 in Fig. 8 indicates the settings in Fig. 3C when the add button 303 in preferences is pressed. Cassette 2 (Cassette2) is set as sheet feeding method (JobInputBin) 802. Long-edge binding (TwoSideLongEdge) is set as two-sided printing (JobDuplexAllDocumentsCotiguously) 803. Additionally, 2 in 1 (2) is set as layout (JobNupAllDocumentsCotiguously) 804.

Lastly, in S708, the print settings screen extension unit 211 stores the printing apparatus type obtained in S706 and the print settings obtained in S707 as preferences management data of the shared information 216. Fig. 5B illustrates an example of preferences management data after a new preferences preset is stored (added).

In Fig. 5B, the preferences preset named 2 in 1 (Two-sided) in the name field in Fig. 6A is registered as a preferences preset after the preinstalled standard preset.

The type in the preferences preset is the type obtained in S706. The example indicates that the printer A in the present embodiment is an EP device. As the type for 2 in 1 (Two-sided), the text string "EP," indicating an EP device, is stored. In the present embodiment, the type is stored as a text string. However, the type may be stored as a value that specifies a particular type. The set values for 2 in 1 (Two-sided) correspond to the settings in Fig. 3B. In this example, all set values defined in the PT are stored.

The storage format for settings indicated as set values illustrated in Fig. 5B is merely an example and may be stored in binary form. Instead of storing the set values of all print settings items defined in the PT, only the set values of print settings items that have been changed from the default values may be stored, and the default values may remain applied to unchanged print settings.

Fig. 3C illustrates the print settings screen, displayed by the print settings screen extension unit 211, in which the preferences preset 2 in 1 (Two-sided) is selected in the preferences 302 after the preferences preset 2 in 1 (Two-sided) is stored. In Fig. 3C, the preferences name stored in Fig. 6A is displayed in the preferences 302, while the set values in Fig. 3B remain unchanged.

### Print settings screen for different types of printing apparatuses

The following describes the state when the print settings screen for a printer B, which serves as the printing apparatus 102 and is different from the printing apparatus in Figs. 3A, 3B, and 3C, is opened with the preferences management data illustrated in Fig. 5B being stored in the shared information 216 by the extension application 201. The printer B is an inkjet device (IJ), which is different from the printer A's type (EP).

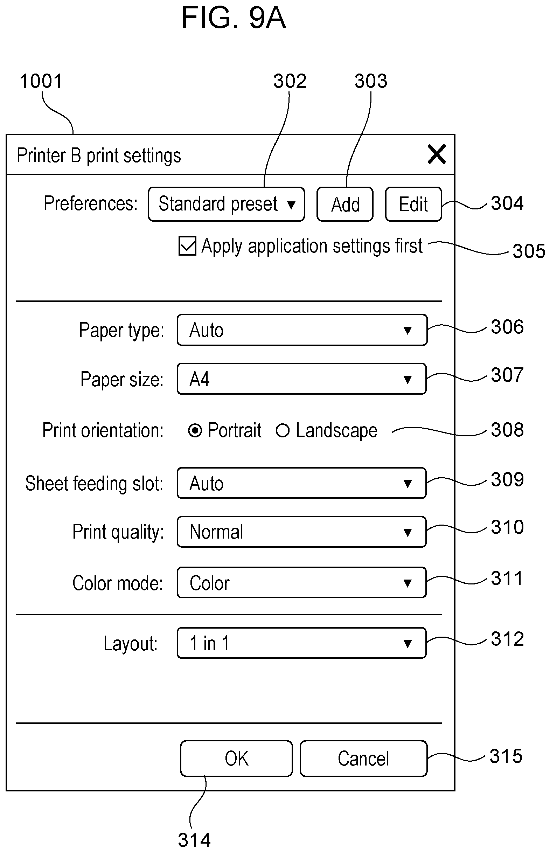

Fig. 9A illustrates an example of a screen displayed by the print settings screen extension unit 211 when the printer B is connected as the printing apparatus 102. The OS invokes the print settings screen extension unit 211 when the user provides an instruction in the drawing application 201 to display the print settings screen for the printer B.

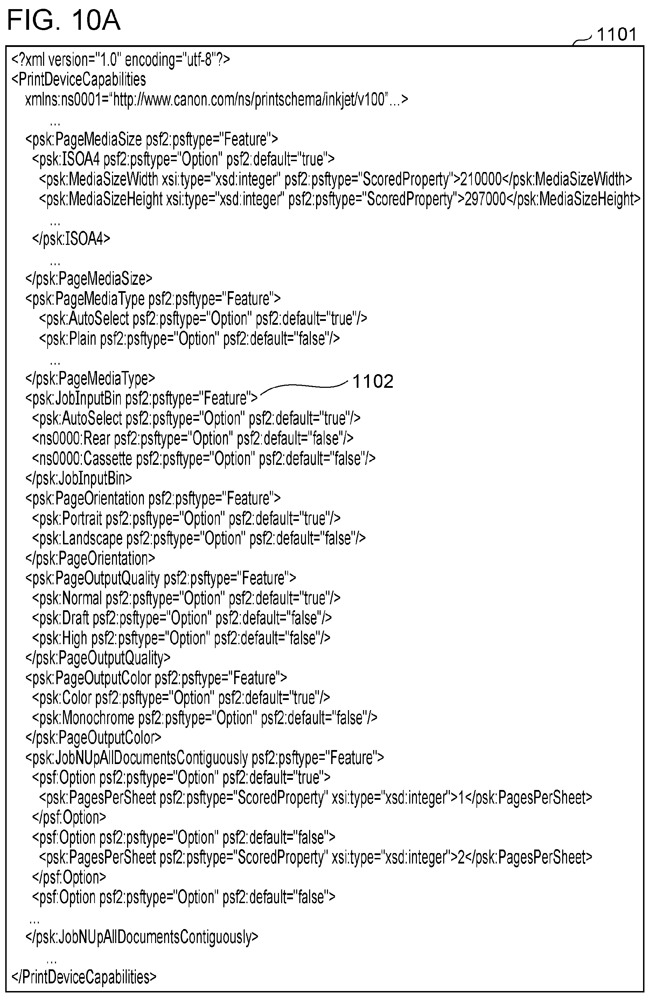

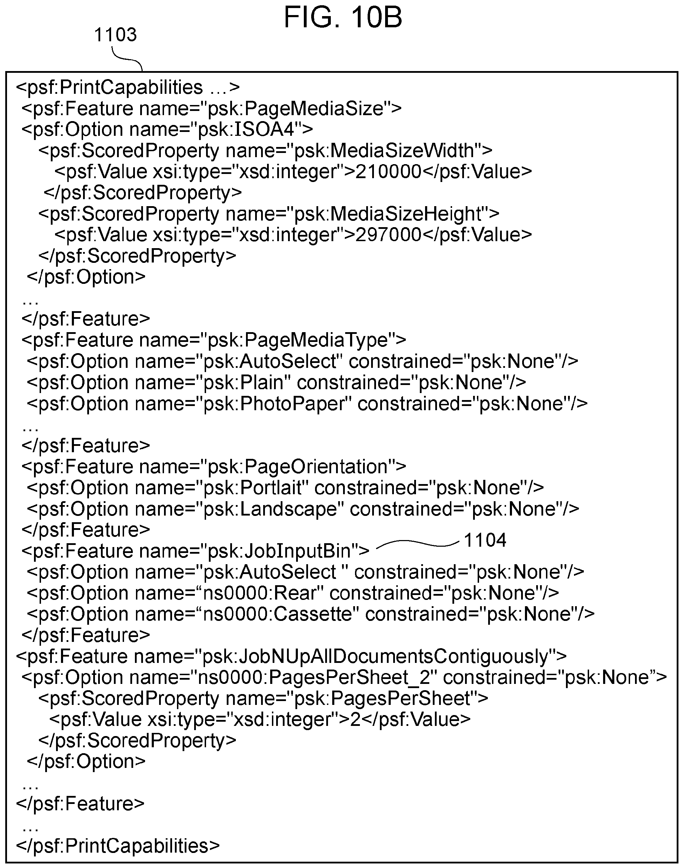

The print settings screen extension unit 211 displays a screen on which the user can select the print function set values selectable in the print data generation software 202, based on the printer B's PC obtained from the OS. The PC is generated by the OS based on the PDC. An example of the printer B's PDC is presented as PDC 1101 in Fig. 10A, and an example of the printer B's PC is presented as PC 1103 in Fig. 10B.

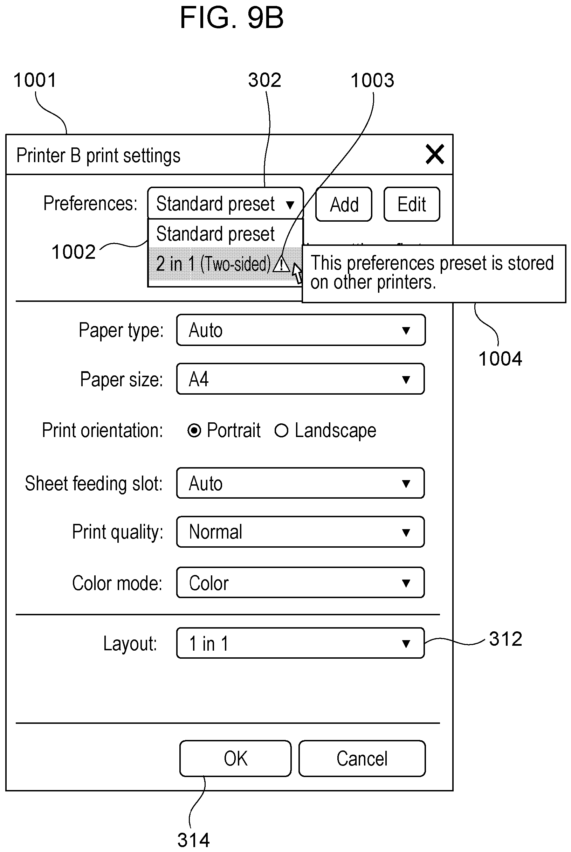

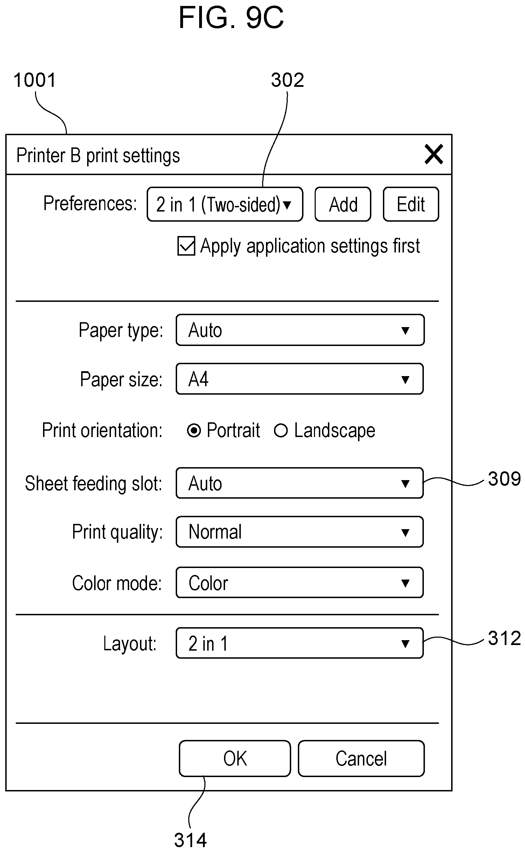

In the present embodiment, the printer B differs from the printer A in that the printer B does not support cassette 2 as a sheet feeding slot setting. As a result, there is no set value (Option) of cassette 2 (Cassette2) for JoblnputBin 1102 and JoblnputBin 1104, which indicate the function of the sheet feeding slot. The printer B additionally differs from the printer A in that the printer B does not support two-sided printing. As a result, there is no JobDuplexAllDocumentsCotiguously that indicates two-sided printing in the PDC 1101 and the PC 1103. In Figs. 9A, 9B, and 9C, the same functions as in Fig. 3 are denoted by the same numerals, and details are not repeated.

Fig. 9B illustrates an example in which the user clicks a combo box in the preferences 302 using the pointing device 117, displaying a list 1002 of selectable preferences presets. In Fig. 9B, a notification object 1003 is displayed. The notification object 1003 indicates that the preferences preset 2 in 1 (Two-sided), stored as the print settings for the printer A, is for a different type. When the user hovers the cursor of the pointing device 117 over 2 in 1 (Two-sided), a message indicating that the preferences preset is stored on a different printing apparatus is displayed in a tooltip 1004.

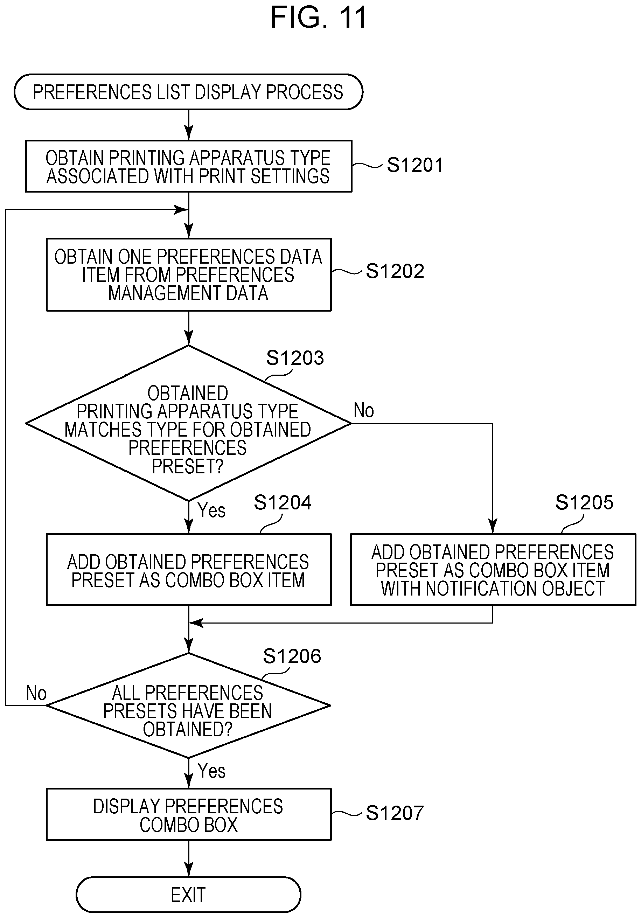

Fig. 11 illustrates the process of creating data in the combo box in the preferences 302. This process is executed when the OS invokes the print settings screen extension unit 211. When the OS invokes the print settings screen extension unit 211, in S1201, the print settings screen extension unit 211 obtains the type of printing apparatus associated with the currently opened print settings screen. Details of the operation in S1201 are the same as in Fig. 7B, and the description of the details is not repeated. In the present embodiment, it is assumed that the printing apparatus type of the printer B associated with the print settings in Figs. 9A, 9B, 9C is determined to be IJ.

Next, in S1202, the print settings screen extension unit 211 obtains one preferences data item from the preferences management data illustrated in Fig. 5B.

Subsequently, in S1203, the print settings screen extension unit 211 performs a comparison to determine whether the type for the preferences data obtained in S1202 matches the type of the printer B obtained in S1201. Specifically, in the preferences management data in Fig. 5B, data of the standard preset is obtained as the first preferences preset. Since the standard preset is a preferences preset applicable to all printing apparatuses, ALL is set as the type for the standard preset. In this case, any type of printing apparatus obtained in S1201 matches in the determination in S1203.

When the type matches in the determination in S1203, the print settings screen extension unit 211 adds the preferences name obtained in S1202 as a combo box item in the preferences 302 in S1204. Specifically, when the first data item is the standard preset, the standard preset is added.

Subsequently, the print settings screen extension unit 211 determines in S1205 whether all preferences presets have been obtained from the preferences management data. For the preferences management data illustrated in Fig. 5B, after the standard preset as the first item is obtained, the determination is No because the preferences data 2 in 1 (Two-sided) remains. Thus, the operation in S1202 is performed again, and the subsequent data item 2 in 1 (Two-sided) is retrieved.

Since the type of the printer B, associated with the print settings in Figs. 9A, 9B, and 9C and obtained in S1201, is IJ, while the type for 2 in 1 (Two-sided) obtained in S1202 is EP, the determination in S1203 is No, and the operation in S1205 is performed.

In S1205, the print settings screen extension unit 211 adds the notification object 1003 when adding the preferences name obtained in S1202 as a combo box item in the preferences 302. As a result, the preferences name 2 in 1 (Two-sided) is added to the combo box with the notification object 1003. Provided that the user can recognize the difference, any display method may be used instead of the notification object 1003, such as changing the background color of the preferences name.

Subsequently, it is determined in S1206 whether all preferences presets in Fig. 5B have been obtained. The determination is Yes because all preferences presets such as the standard preset and 2 in 1 (Two-sided) have been obtained, and the preferences combo box is displayed in S1207.

### Application of preferences preset

When the user selects a preferences preset from the list 1002 of selectable preferences presets, the combination of set values stored in the selected preferences preset is applied to the print settings.

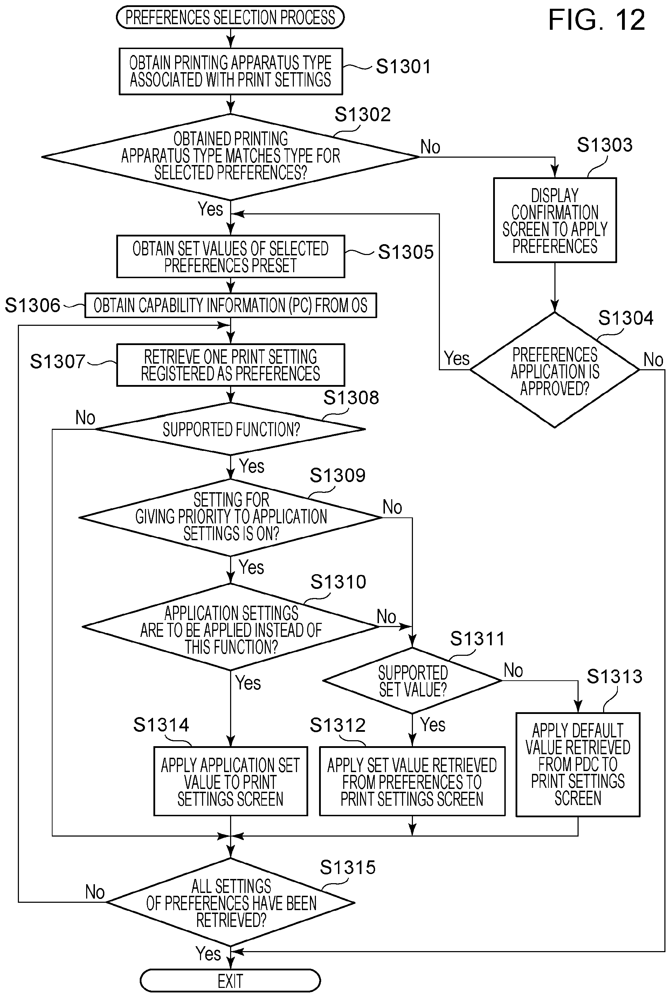

Fig. 12 illustrates the flow of a process executed by the print settings screen extension unit 211 when the user selects a preferences preset.

When the user selects a preferences preset, in S1301, the print settings screen extension unit 211 obtains the type of printing apparatus associated with the print settings screen (selected as the print output destination). Details of the operation in S1301 are the same as in Fig. 7B, and the details are not repeated. It is assumed that the type of the printer B associated with the print settings screen in Figs. 9A, 9B, and 9C is determined to be IJ.

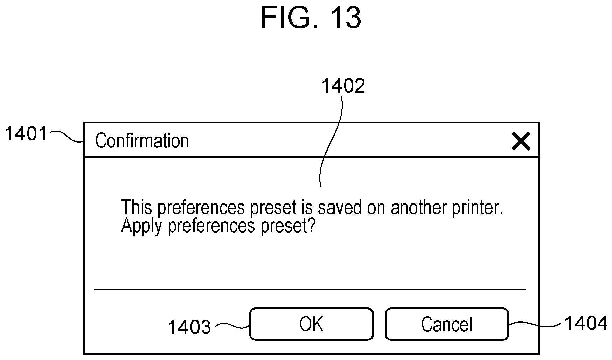

Next, in S1302, the print settings screen extension unit 211 determines whether the type for the print settings obtained in S1301 matches the type for the preferences preset selected from the list 1002 of selectable preferences presets. When it is determined in S1302 that the type matches, the process proceeds to S1305. When it is determined in S1302 that the type does not match, the print settings screen extension unit 211 proceeds to the operation in S1303 to display a screen prompting the user to choose whether to apply the preferences preset. Fig. 13 illustrates an example of an application confirmation screen displayed by the print settings screen extension unit 211 in S1303.

An application confirmation screen 1401 in Fig. 13 includes a message 1402 to confirm the application of the preferences preset, an OK button 1403 to approve the application, and a cancel button 1404 to cancel the application. When the user presses the OK button 1403, the print settings screen extension unit 211 determines in S1304 that the application is approved and proceeds to S1305. When the user presses the cancel button 1404, the print settings screen extension unit 211 determines in S1304 that the application is rejected and ends the process without performing further operation.

When the type for the preferences preset matches the printing apparatus in S1302, or when the application of the preferences preset for a different type is approved in S1304, the print settings screen extension unit 211 obtains the set values of the selected preferences preset in S1305.

Next, the print settings screen extension unit 211 obtains the PC (of the printer B in this example) corresponding to the printing apparatus 102 selected as the print output destination from the OS in S1306.

Subsequently, in S1307, the print settings screen extension unit 211 retrieves one of the set values of the selected preferences preset obtained in S1305.

In S1308, the print settings screen extension unit 211 determines whether the set value of the preferences preset retrieved in S1307 is a function (Feature) supported by the PC of the printing apparatus obtained in S1306. When it is determined in S1308 that the set value of the preferences preset is an unsupported function, the process proceeds to the operation in S1315. When it is determined in S1308 that the set value of the preferences preset is supported, the process proceeds to the operation in S1309.

In S1309, the print settings screen extension unit 211 determines whether the checkbox 305 to prioritize the (drawing) application settings, illustrated in Figs. 9A, 9B, and 9C, is checked. When the checkbox 305 is checked, in S1310, the print settings screen extension unit 211 determines whether the function of the set value retrieved in S1307 is a function for which the application settings are prioritized.

Specifically, the print settings screen extension unit 211 determines whether the function of the set value retrieved in S1307 is paper size or print orientation. When the function corresponds to either setting, the print settings screen extension unit 211 proceeds to S1314. In S1314, the print settings screen extension unit 211 applies the set value set in the application to the corresponding function on the print settings screen and proceeds to S1315. In the case in which specific functions other than paper size and print orientation are also functions for which the application settings are prioritized, these specific functions may also be included in the determination.

When it is determined in S1309 that the checkbox 305 to prioritize the application settings is not checked, the print settings screen extension unit 211 proceeds to S1311. When it is determined in S1310 that the set value retrieved in S1307 does not correspond to any function for which the application settings are prioritized, the print settings screen extension unit 211 proceeds to S1311.

In S1311, the print settings screen extension unit 211 determines whether the preference set value retrieved in S1307 is a set value (Option) supported by the PC obtained in S1306. When it is determined in S1311 that the preference set value retrieved in S1307 is a supported set value, the print settings screen extension unit 211 proceeds to S1312. In S1312, the print settings screen extension unit 211 applies the preference set value retrieved in S1307 to the corresponding function on the print settings screen.

When it is determined in S1311 that the preference set value retrieved in S1307 is not among the supported set values, the print settings screen extension unit 211 proceeds to S1313. In S1313, the print settings screen extension unit 211 applies the default value of the set value of the corresponding function from the PDC 1101 to the corresponding function on the print settings screen.

Specifically, when the user selects the preferences preset 2 in 1 (Two-sided) on the print settings screen for the printer B in Fig. 9B, cassette 2 is set as the sheet feeding slot in the preferences preset 2 in 1 (Two-sided). However, the printer B does not support cassette 2 as the set value for the sheet feeding slot (no Option of Cassette2 for JoblnputBin 1102 in the PDC 1101).

Thus, when the preferences preset 2 in 1 (Two-sided) is selected, Auto (AutoSelect), which is the default value of the set value for the sheet feeding slot 1102 in the PDC 1101 (Option of default="true") is set as the set value of the sheet feeding slot.

When the determination in S1308 is No, or after the operation in S1312, S1313, or S1314 is performed, the print settings screen extension unit 211 checks in S1315 whether all the set values of the preferences preset obtained in S1305 have been retrieved. When not all the set values of the preferences preset have been retrieved, the process returns to S1307 to retrieve the subsequent set value of the preferences preset, and the subsequent operations are performed on the retrieved set value.

In S1315, when the print settings screen extension unit 211 determines that all the set values of the preferences preset obtained in S1305 have been retrieved, the print settings screen extension unit 211 ends the process.

The print settings screen in Fig. 9C illustrates the state in which the preferences preset 2 in 1 (Two-sided) is applied from the list 1002 of selectable preferences presets in Fig. 9B. When the user selects 2 in 1 (Two-sided) from the list 1002 of selectable preferences presets in Fig. 9B, the preferences preset application confirmation screen 1401 in Fig. 13 is displayed. When the user presses the OK button 1403 on the preferences preset application confirmation screen 1401, the print settings screen transitions to the state in Fig. 9C.

Specifically, compared to the print settings in Fig. 9A, Auto, which is the default value, is set as the sheet feeding slot 309, and 2 in 1 is set as the layout 312. For the other settings, Fig. 9C illustrates a state in which the same settings as in Fig. 9A are applied or remain unchanged due to the setting 305, which prioritizes the application settings. When the user presses the OK button 314, the print settings on the print settings screen 1001 are applied to the PT and used when generating the print data.

### Edit of preferences preset

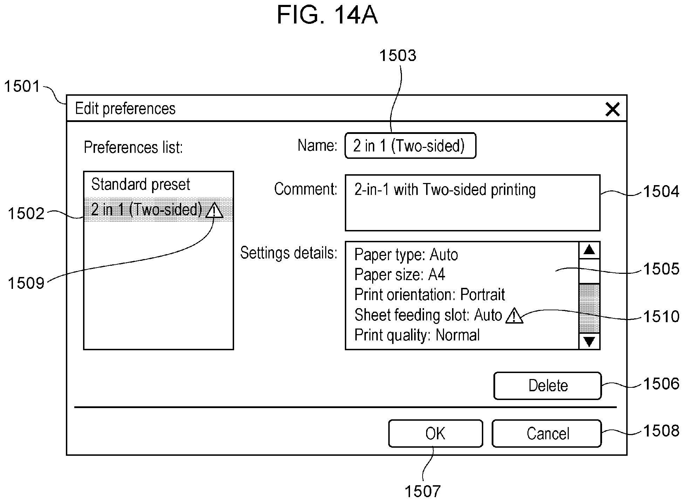

Fig. 14A illustrates an example of a preferences edit screen displayed by the print settings screen extension unit 211 when a preferences edit button 304 is pressed in Fig. 9C. The preferences edit screen 1501 displays a stored preferences list 1502, a name 1503 of the preferences preset selected in the preferences list 1502, a comment 1504, and settings details 1505. The preferences edit screen 1501 also includes a button 1506 for deleting the preferences preset selected in the preferences list 1502, an OK button 1507 for applying the final changes, and a cancel button 1508 for closing the preferences edit screen 1501 without performing further operation.

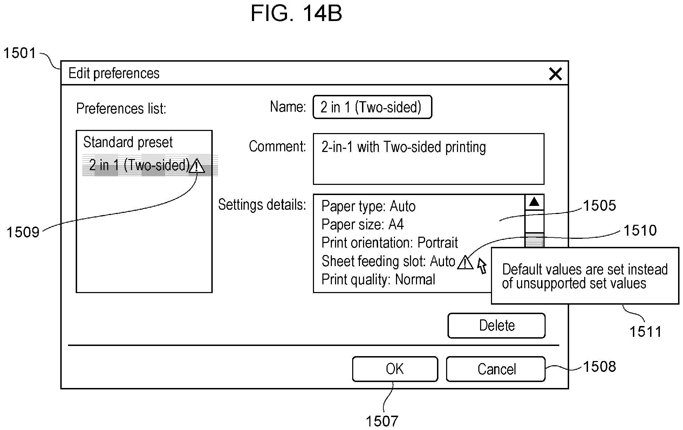

Fig. 14 illustrates the state in which the preferences preset 2 in 1 (Two-sided) is selected in the preferences list 1502, displaying the name, comment, and settings details for 2 in 1 (Two-sided).

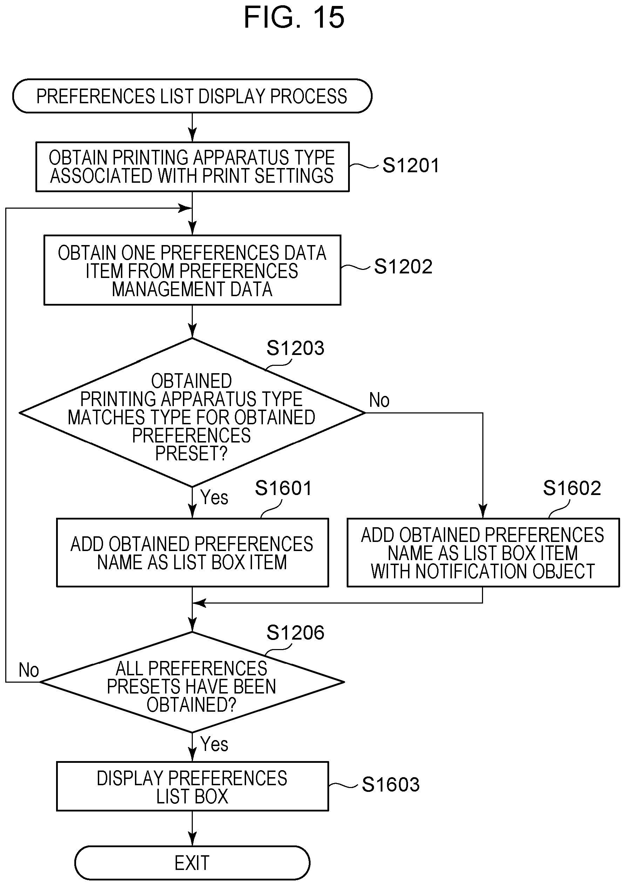

When the preferences edit screen 1501 is displayed, the list of preferences stored in the preferences list 1502 is displayed. Fig. 15 illustrates the process flow for displaying the list of preferences stored in the preferences list 1502. The same operations as in Fig. 11 are indicated by the same numerals, and the descriptions of the details are not repeated.

When the user presses the preferences edit button 304, the print settings screen extension unit 211 determines in S1203 whether the obtained type of the printing apparatus matches the type for the obtained preferences.

When it is determined In S1203 that the obtained type of the printing apparatus matches the type for the obtained preferences, in S1601, the print settings screen extension unit 211 adds the obtained preferences name as the item in a list box of the preferences list. When it is determined In S1203 that the obtained type of the printing apparatus does not match the type for the obtained preferences, in S1602, the print settings screen extension unit 211 adds the obtained preferences name as the item in the list box of the preferences list with a notification object attached.

When the print settings screen extension unit 211 determines in S1206 that all preferences have been obtained, the print settings screen extension unit 211 displays the list box of the preferences list in S1603.

Fig. 14A illustrates an example in which the preferences preset 2 in 1 (Two-sided) is determined to be different from the type of the printer B associated with the print settings in Fig. 9C, with a notification object 1509 attached. Provided that the user can recognize the difference, any display method may be used instead of the object 1509, such as changing the background color of the preferences name.

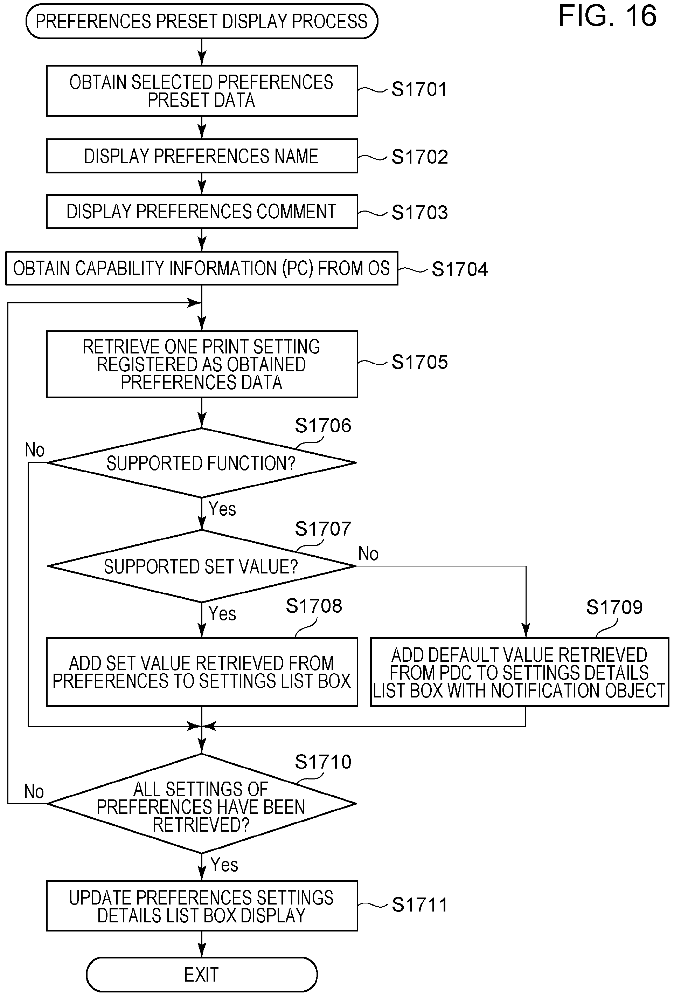

Fig. 16 illustrates a process flow when a given preferences preset is selected in the preferences list 1502. When the user selects a preferences preset in the preferences list 1502, the print settings screen extension unit 211 obtains data of the selected preferences preset in S1701. Next, in S1702, the print settings screen extension unit 211 displays in the name 1503 the preferences name in the data of the preferences preset obtained in S1701. Subsequently, in S1703, the print settings screen extension unit 211 displays in the comment 1504 the comment in the data of the preferences preset obtained in S1701.

Next, in S1704, the print settings screen extension unit 211 obtains the PC (of the printer B in this example) corresponding to the printing apparatus 102 selected as the print output destination from the OS. Subsequently, in S1705, the print settings screen extension unit 211 retrieves one of the print settings from the data of the preferences presets obtained in S1701 and performs the operation in S1706.

In S1706, the print settings screen extension unit 211 determines whether the set value of the preferences preset retrieved in S1705 corresponds to a function (Feature) supported by the PC obtained in S1704. When the print settings screen extension unit 211 determines in S1706 that the set value of the preferences preset retrieved in S1705 is a supported function, the print settings screen extension unit 211 proceeds to S1707.

In S1707, the print settings screen extension unit 211 determines whether the set value of the preferences preset retrieved in S1705 is a set value (Option) supported by the PC obtained in S1704. When the print settings screen extension unit 211 determines in S1707 that the set value of the preferences preset is a set value supported by the PC, the print settings screen extension unit 211 proceeds to S1708. In S1708, the print settings screen extension unit 211 adds the set value of the preferences preset retrieved in S1705 to a list box of settings details in the preferences edit screen 1501.

When the print settings screen extension unit 211 determines in S1707 that the set value of the preferences preset retrieved in S1705 is a set value not supported by the PC, the print settings screen extension unit 211 proceeds to S1709. In S1709, the print settings screen extension unit 211 adds the default value of the set value for the corresponding function from the PDC 1101 to the list box 1505 of the settings details in the preferences edit screen 1501 with a notification object 1510 attached.

Specifically, when the user selects the preferences preset 2 in 1 (Two-sided) on the preferences edit screen for the printer B in Fig. 14A, cassette 2 is set at the sheet feeding slot in the preferences preset. However, the printer B does not support the set value cassette 2 (no Option of Cassette2 for the sheet feeding slot 1104 in the PC 1103).

Thus, when the preferences preset 2 in 1 (Two-sided) is selected, the default value of the set value for the sheet feeding slot 1102 in the PDC 1101 (Option of default="true") is set as the set value of the sheet feeding slot. Specifically, Auto (AutoSelect) is displayed as the set value for the sheet feeding slot with the notification object 1510 attached. Provided that the user can recognize the difference, any display method may be used instead of the object 1510, such as changing the background color of the preferences name.

When the user hovers the cursor of the pointing device 117 over the preferences preset with the notification object 1509 attached or the set value with the notification object 1510 attached, a message may be displayed in a tooltip. Fig. 14B illustrates an example in which a message 1511 is displayed in a tooltip When the user hovers the cursor of the pointing device 117 over the set value with the notification object 1510 attached.

When the determination in S1706 is No, or after the operation in S1708 or S1709 is performed, the print settings screen extension unit 211 checks in S1710 whether all the set values of the preferences preset obtained in S1701 have been retrieved. When not all the set values of the preferences preset obtained in S1701 have been retrieved, the process returns to S1705 to retrieve the subsequent set value of the preferences preset, and the subsequent operations are performed on the retrieved set value.

In S1710, when the print settings screen extension unit 211 determines that all the set values of the preferences preset obtained in S1701 have been retrieved, the print settings screen extension unit 211 proceeds to S1711. In S1711, the print settings screen extension unit 211 updates the display of the list box of the settings details 1505 of the preferences preset and then ends the process.

The name 1503 and the comment 1504 on the preferences edit screen 1501 display the name and comment registered in the preferences selected in the preferences list 1502, but the name and comment can be changed to any name and comment. When the user changes the name 1503 and the comment 1504 and presses the OK button 1507, the print settings screen extension unit 211 changes the information in the preferences management data in the shared information 216 to the changed name and comment.

Additionally, when the name 1503 and the comment 1504 of the preferences preset on the preferences edit screen 1501 are changed, the data in the temporary area is edited. The preferences preset selected in the preferences list 1502 can be deleted by pressing the delete button 1506. When the delete button 1506 is pressed, the target preferences are deleted from the data in the temporary area. When the user presses the OK button 1507, the print settings screen extension unit 211 applies the changed data in the temporary area to the preferences management data in the shared information 216.

When preinstalled preferences, such as the standard preset, are selected, the name 1503, the comment 1504, and the delete button 1506 are grayed out to prevent changes.

As described above, in the printing system according to the present embodiment, users can register multiple combinations of print settings through the extension application and set the registered combination of print settings to print.

### Second embodiment

The following describes a second embodiment. In the present embodiment, when the print settings screen of the printing apparatus newly associated with the extension application is activated, a preferences preset for use is selected from among the preferences presets stored as the print settings for other printing apparatuses. In the following, configurations and operations not mentioned in the description are the same as in the first embodiment, and the descriptions thereof are not repeated.

In the present embodiment, "preferences support management data" is stored in the shared information 216.

In the preferences support management data, preferences presets supported by various printing apparatuses 102 are managed (stored). Preferences presets supported by various printing apparatuses 102 represent preferences presets for use by the printing apparatuses 102; however, it is not necessary for all functions and set values included in the preferences presets to be implementable by the printing apparatuses 102. In the present embodiment, a case in which the user selects a preferences preset to be used (supported) by various printing apparatuses 102.

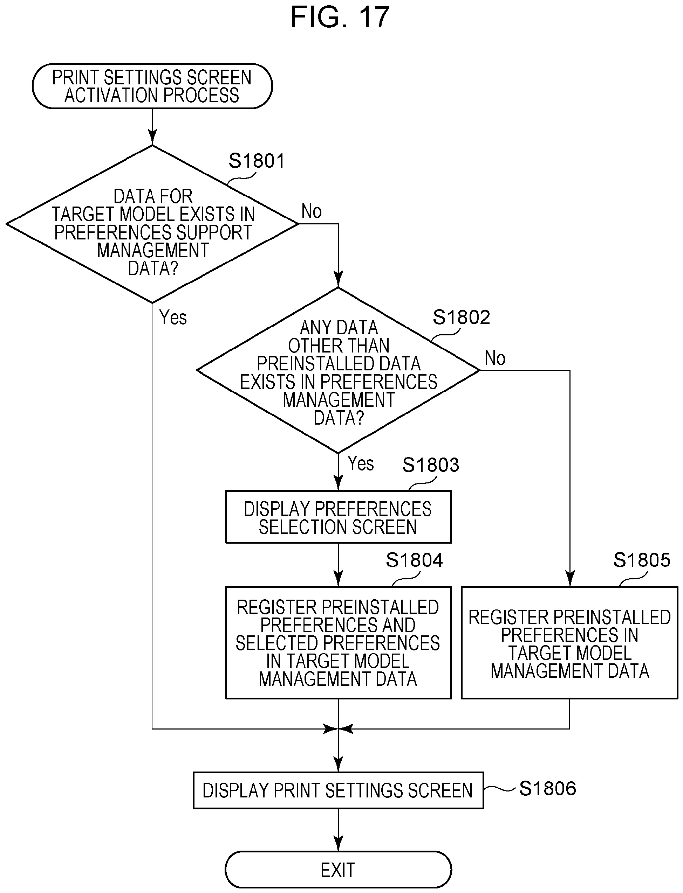

Fig. 17 illustrates a process flow executed when the print settings screen extension unit 211 is activated by an instruction from the OS in the present embodiment. When the print settings screen extension unit 211 is activated by an instruction from the OS, the print settings screen extension unit 211 performs S1801. Specifically, the print settings screen extension unit 211 checks in S1801 whether data for the printing apparatus 102 associated with the print settings screen currently being activated exists in the preferences support management data stored in the shared information 216.

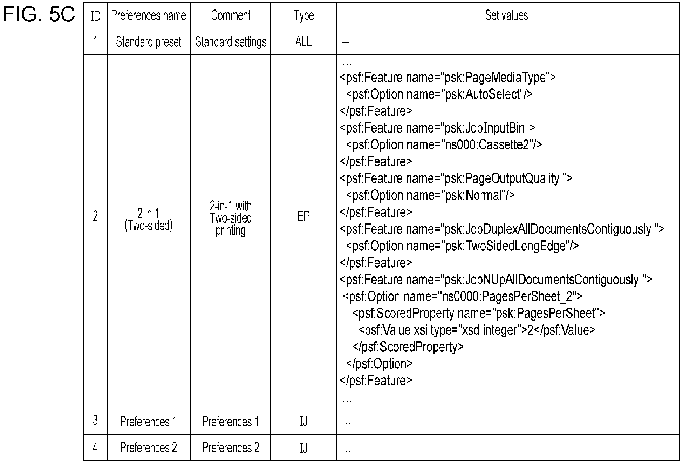

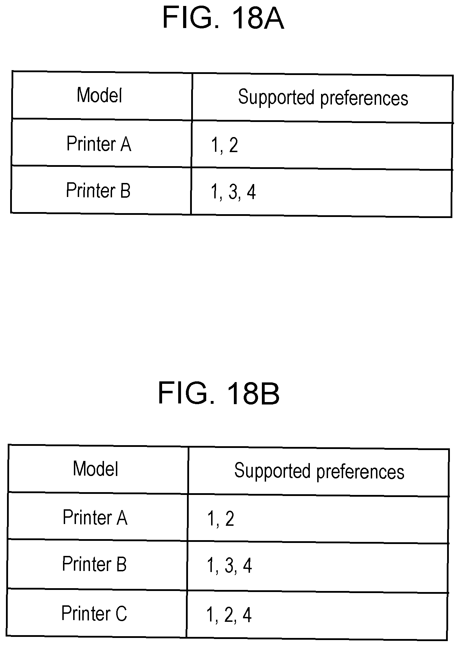

Fig. 5C illustrates an example of preferences management data of the extension application in the second embodiment. Figs. 18A and 18B illustrate examples of preferences support management data. In the present embodiment, the type of the printer A is EP, and the type of the printer B is IJ. The preferences presets are registered in the print settings for the respective models, as illustrated in Fig. 18A. The numerals in supported preferences indicate IDs in preferences management data, corresponding to the preferences management data in Fig. 5C.

In the preferences management data in Fig. 5C, the standard preset is a preinstalled preferences preset common to all models and is stored as the type ALL. Similarly to the first embodiment, 2 in 1 (Two-sided) is a preferences preset stored in the print settings for the printer A and is stored as the type EP. Preferences 1 and 2 are preferences presets stored in the print settings for the printer B and are stored as the type IJ. In the present embodiment, the set values of preferences 1 and 2 are not specified; however, in practical use, collections of set values are stored.

Referring back to the process in Fig. 17, the print settings screen extension unit 211 checks in S1801 whether data for the printing apparatus 102 associated with the print settings screen currently being activated exists in the preferences support management data.

When data for the printing apparatus 102 associated with the print settings screen currently being activated exists in the preferences support management data, the print settings screen extension unit 211 proceeds to S1806. In S1806, the print settings screen extension unit 211 displays on the print settings screen, in a selectable manner, the preferences presets presented by the supported preferences corresponding to the printing apparatus 102.

When data for the printing apparatus 102 associated with the print settings screen currently being activated does not exist in the preferences support management data, the print settings screen extension unit 211 proceeds to S1802. In S1802, the print settings screen extension unit 211 checks whether any preferences preset other than the preinstalled standard preset exists in the preferences management data. In S1802, when the print settings screen extension unit 211 determines that any preferences preset other than the preinstalled standard preset exists in the preferences management data, the print settings screen extension unit 211 displays a preferences selection screen in S1803.

Specifically, when the user activates the print settings screen for the printer C for the first time while the preferences support management data in Fig. 18A is stored, no information for the printer C exists in the preferences support management data in Fig. 18A. As a result, the determination in S1801 is No, and the operation in S1802 is then performed. Next, in S1802, it is determined that any preferences preset other than the standard preset exists in the preferences management data in Fig. 5C, and thus the process proceeds to the operation in S1803.

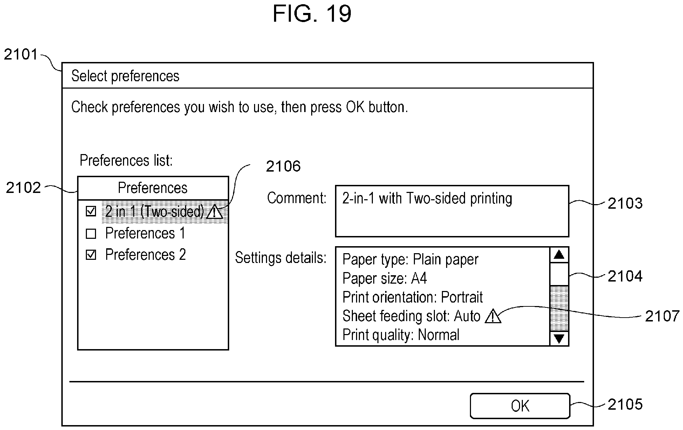

Fig. 19 illustrates an example of the preferences selection screen displayed by the print settings screen extension unit 211 in S1803. A preferences selection screen 2101 displays a stored preferences list 2102, a comment 2103 of the preferences preset selected in the preferences list 2102, and settings details 2104. The preferences selection screen 2101 also includes an OK button 2105 for registering the preferences preset selected in the preferences list 2102 and closing this screen.

Fig. 19 illustrates the state in which the preferences preset 2 in 1 (Two-sided) is selected in the preferences list 2102, displaying the name, comment, and settings details for 2 in 1 (Two-sided). The preferences list 2102 displays a list of preferences presets registered in the preferences management data in Fig. 5C, without displaying the standard preset, because the standard preset is unconditionally supported and selectable by any model.

A notification object 2106 is attached to preferences presets stored in the printing settings for other types of printing apparatuses different from the type of the printing apparatus 102 associated with the print settings screen currently being activated. A notification object 2107 is attached to unsupported settings details. The notification object 2106 may be attached to the preferences preset stored in the printing settings for the same type of printing apparatus when some settings details (functions, set values) are not supported.

Provided that the user can recognize the difference, any display method may be used instead of the object 2106 or 2107, such as changing the background color of the preferences name. When the user hovers the cursor of the pointing device 117 over the notification object 2106, a message indicating that the preferences preset is stored on a different type of printing apparatus may be displayed in a tooltip. When the user hovers the cursor of the pointing device 117 over the notification object 2107, a message indicating that the target set value is changed to the default value may be displayed in a tooltip.

In Fig. 19, the user has checked 2 in 1 (Two-sided) and preferences 2 as the preferences presets for use in the print settings of the printer C. When the user presses the OK button 2105 of the preferences selection screen 2101, the process proceeds to S1804. In S1804, the print settings screen extension unit 211 registers the standard preset, which is a preinstalled preferences, as well as the preferences presets selected (checked) on the preferences list 2102, in the preferences support management data in Fig. 18A.

Fig. 18B illustrates the preferences support management data after the registration. In the preferences support management data in Fig. 18B, the following preferences presets are associated as supported preferences with the printer C associated with the print settings screen currently being activated: ID 1 for the standard preset, ID 2 for 2 in 1 (Two-sided) selected on the preferences selection screen 2101, ID 4 for preferences 2.

Subsequently, the print settings screen extension unit 211 displays a print settings screen that allows selection of preferences presets associated as the supported preferences in S1806 and then ends the process.

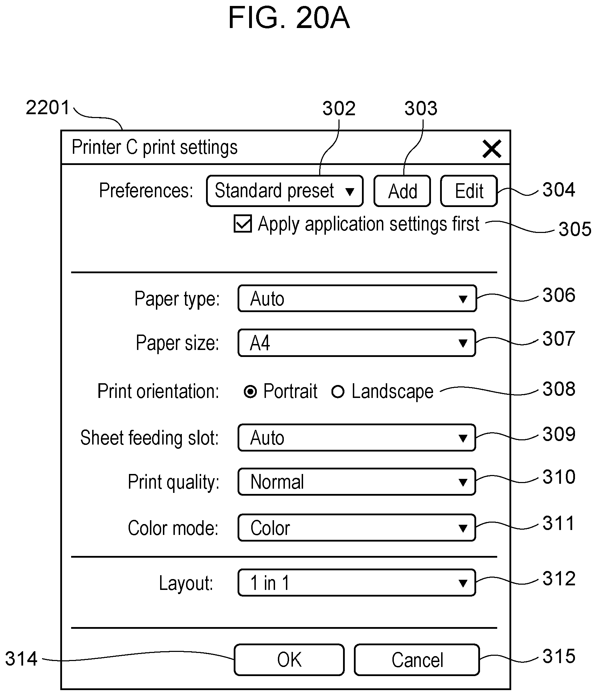

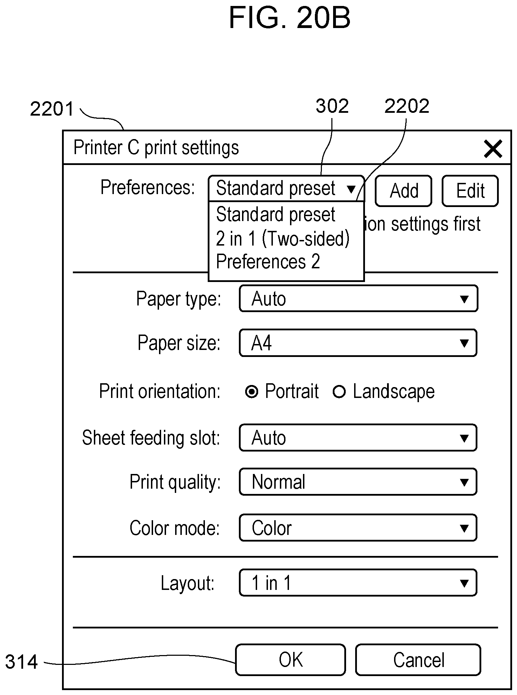

Fig. 20A illustrates an example of the print settings screen displayed in S1806. The same functions as in Figs. 3A, 3B, and 3C are indicated by the same numerals, and the descriptions thereof are not repeated. Fig. 20B illustrates an example in which the user clicks a combo box in the preferences 302 on a print settings screen 2201 for the printer C using the pointing device 117, displaying a list 2202 of selectable preferences presets. The list 2202 of preferences presets presents the preferences presets supported by the printer C in the preferences support management data in Fig. 18B.

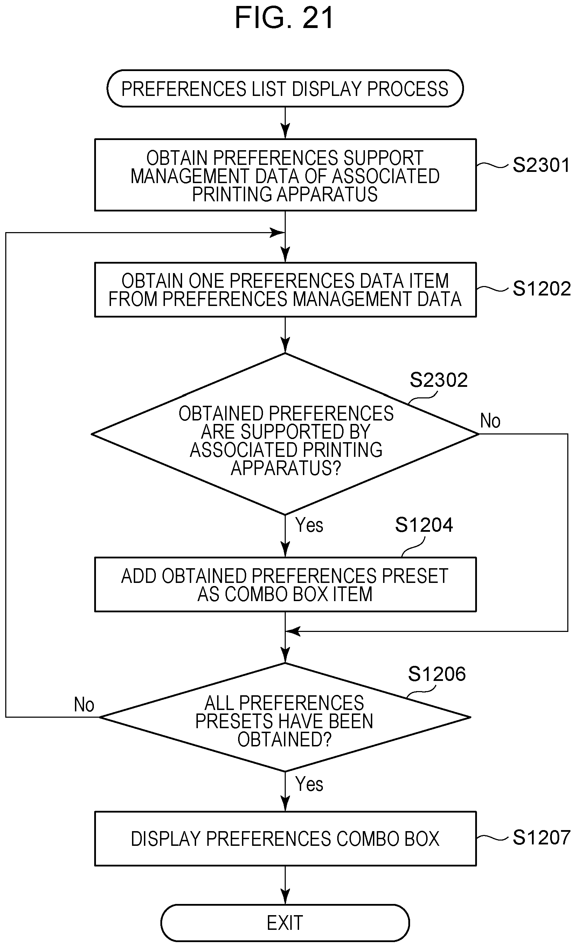

Fig. 21 illustrates a flow of process details when displaying the combo box in the preferences 302. The same operations as in Fig. 11 are denoted by the same numerals, and the descriptions thereof are not repeated.

First, in S2301, the print settings screen extension unit 211 obtains the preferences support management data for the printer C, which is a printing apparatus associated with the print settings, from the preferences support management data illustrated in Fig. 18B. Subsequently, in S2302, the print settings screen extension unit 211 checks whether the one preferences preset obtained in S1202 from in the preferences management data in Fig. 5C is a preferences preset supported by the printer C in the preferences support management data obtained in S2301.

In S2302, when the print settings screen extension unit 211 determines that the preferences of interest exists, the print settings screen extension unit 211 adds the preferences preset obtained in S1202 as an item in the combo box 302. In S2302, when the print settings screen extension unit 211 determines that the preferences of interest is not supported, the print settings screen extension unit 211 does not perform any operation.

When the print settings screen extension unit 211 determines in S1206 that all preferences presets have been obtained, the print settings screen extension unit 211 displays the preferences combo box in S1207. In the present embodiment, since the preferences selection screen in Fig. 19 displays the preferences presets selected for use by the user, no notification object or message is displayed with preferences for different types.

When the user presses the preferences add button 303 to add a new preferences preset on the preferences addition screen 601 in Fig. 6A, the print settings screen extension unit 211 adds the new preferences preset to the preferences management data in Fig. 5C. The print settings screen extension unit 211 also adds the ID of the registered preferences preset to the target model in the preferences support management data in Fig. 18B.

As described above, in the printing system according to the present embodiment, users can select a combination of print settings for use through the extension application, thereby improving usability.

### Third embodiment

The following describes a third embodiment. In the present embodiment, preferences presets are managed for individual printing apparatuses by associating the name of each printing apparatus with preferences management data. In the following, configurations and operations not mentioned in the description are the same as in the first or second embodiment, and the descriptions thereof are not repeated.

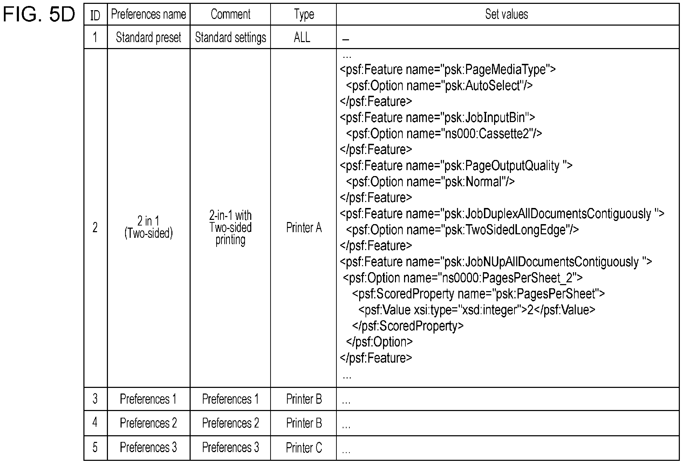

Fig. 5D illustrates an example of preferences management data in the present embodiment. In the preferences management data in Fig. 5D, the names of printing apparatuses associated with the print settings screens on which the preferences presets are stored are stored as the type.

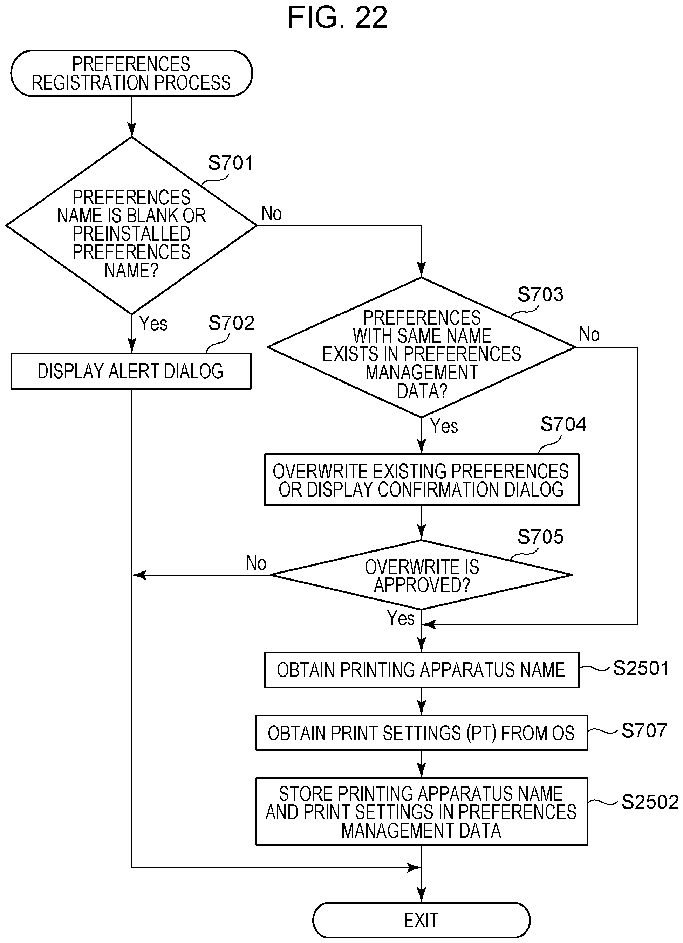

Fig. 22 illustrates a process of registering the preferences management data in Fig. 5D. The same operations as the operations in Fig. 7 are indicated by the same numerals, and the descriptions of the details are not repeated. The process in Fig. 22 is executed when any preferences preset is added on the preferences addition screen 601.

When no preferences of the same name does not exist in S703 or when an instruction is given to overwrite existing preferences of the same name in S705, the print settings screen extension unit 211 obtains the name of the printing apparatus associated with the print settings screen in S2501. It is assumed in the present embodiment that the name of the printing apparatus is information provided in the response from the printing apparatus 102 to the IPP Get-Printer-Attributes operation. However, the information may be obtained using other methods.

Subsequently, in S707, the print settings screen extension unit 211 obtains PT from the OS, and in S2502, stores in the preferences management data the printing apparatus name obtained in S2501 and the print settings indicated by the PT obtained in S707.

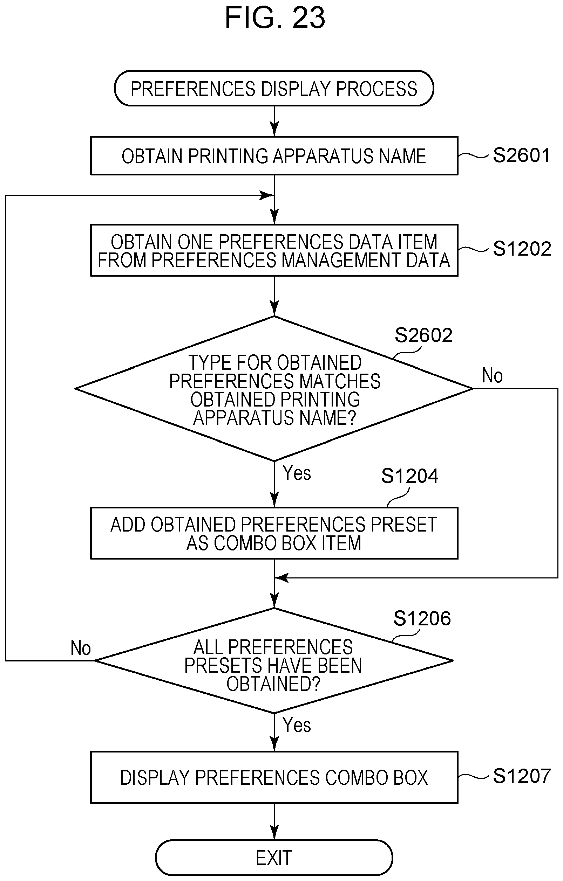

Fig. 23 illustrates a process flow of displaying a print settings screen in the present embodiment.

When the OS invokes the print settings screen extension unit 211, in S2601, the print settings screen extension unit 211 obtains the name of printing apparatus associated with the currently opened print settings screen. The operation in S2601 is the same as the operation in S2501.

Next, the print settings screen extension unit 211 obtains one preferences data item from the preferences management data in Fig. 5D in S1202. Subsequently, the print settings screen extension unit 211 determines in S2602 whether the type for the preferences data obtained in S1202 matches the printing apparatus name obtained in S2601.

When it is determined in S2602 that the type for the preferences data matches the printing apparatus name, the print settings screen extension unit 211 adds the name of the preferences data obtained in S1202 to the preferences combo box. The type for the preinstalled standard preset is ALL, which is determined to match the name of any printing apparatus. When the operation is completed with respect to all preferences data items, in S1207, the print settings screen extension unit 211 displays a combo box in which the preferences presets determined to match the printing apparatus name in S2602 can be selected.

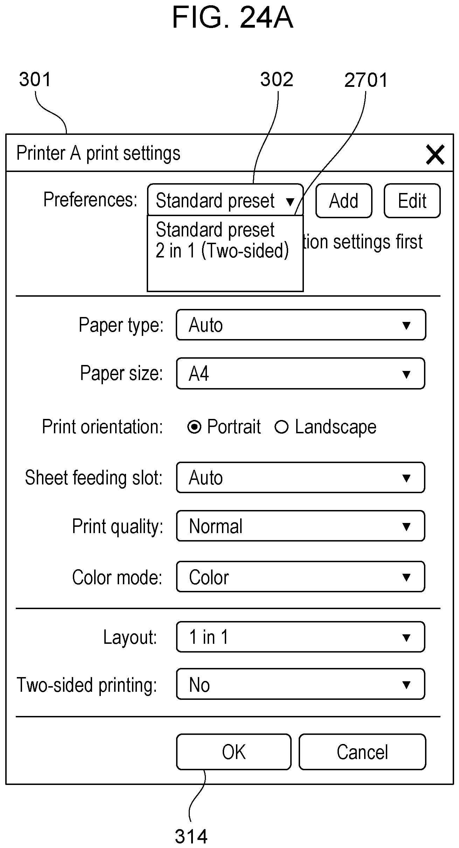

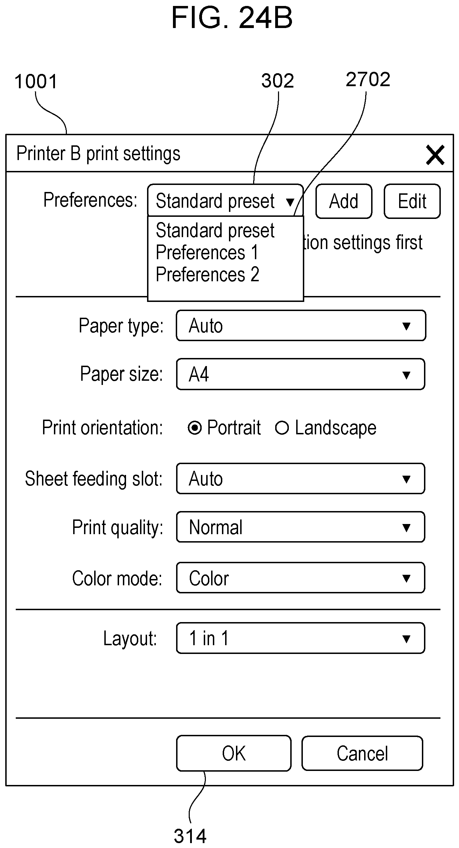

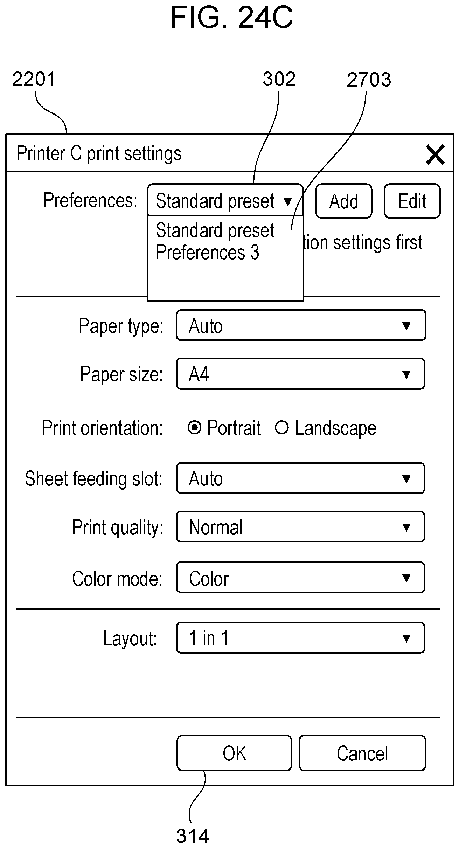

Figs. 24A, 24B, and 24C illustrate examples of the print settings screen displayed by the print settings screen extension unit 211 when the printers A, B, and C are associated as the printing apparatus 102.

Fig. 24A illustrates an example in which the user clicks the combo box in the preferences 302 using the pointing device 117 on the print settings screen associated with the printer A. A list 2701 of preferences presets displays the standard preset and 2 in 1 (Two-sided), which are associated with the printer A in the preferences management data illustrated in Fig. 5D.

Fig. 24B illustrates an example in which the user clicks the combo box in the preferences 302 using the pointing device 117 on the print settings screen associated with the printer B. A list 2702 of preferences presets displays the standard preset and preferences 1 and 2, which are associated with the printer B in the preferences management data illustrated in Fig. 5D.

Fig. 24C illustrates an example in which the user clicks the combo box in the preferences 302 using the pointing device 117 on the print settings screen associated with the printer C. A list 2703 of preferences presets displays the standard preset and preferences 3, which are associated with the printer C in the preferences management data illustrated in Fig. 5D.

As described above, in the printing system according to the present embodiment, only the preferences presets corresponding to the printing apparatus are available, thereby preventing users from using unintended preferences presets and improving usability.

In the same manner as described using, for example, Fig. 15 (S1602) in the first embodiment, when the determination in S2602 is No, notification objects may be attached in the display. Also in this case, users can recognize that selecting the corresponding preferences can cause inconvenience, thereby improving usability.

### Fourth embodiment

The following describes a fourth embodiment. In the present embodiment, different extension applications are used for different models of printing apparatuses, and the preferences presets stored on one extension application are usable on other extension applications. In the following, configurations and operations not mentioned in the description are the same as in the first, second, or third embodiment, and the descriptions thereof are not repeated.

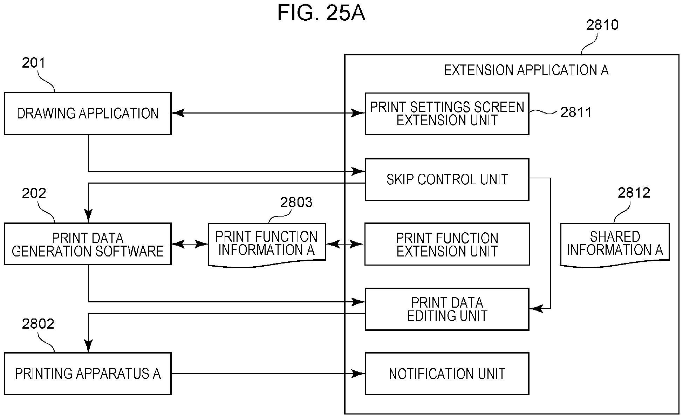

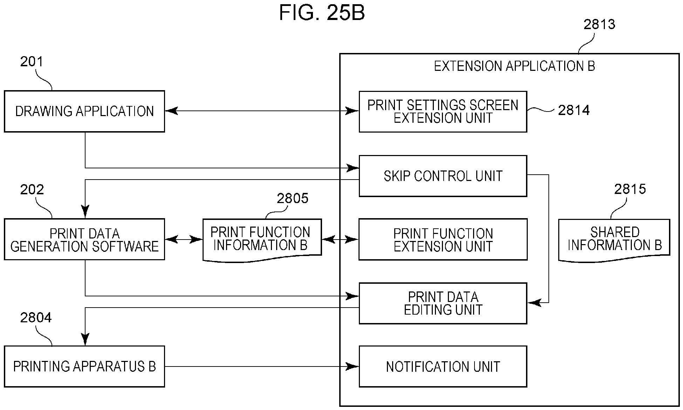

Figs. 25A and 25B illustrate system configurations according to the present embodiment. Fig. 25A illustrates an example in which a printing apparatus A 2802 is associated with an extension application A 2810 corresponding to the printing apparatus A, and Fig. 25B illustrates an example in which a printing apparatus B 2804 is associated with an extension application B 2813 corresponding to the printing apparatus B. In the present embodiment, it is assumed that the printing apparatuses A and B are different models.

As illustrated in Figs. 25A and 25B, print function information (PDC) is created for each model of printing apparatus (print function information A 2803 and print function information A 2805). The shared information in the extension application differs between the individual models (shared information A 2812 and shared information B 2815).

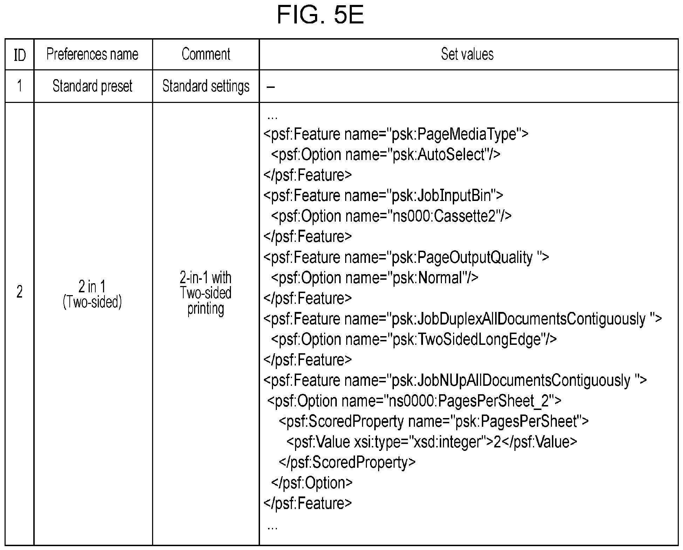

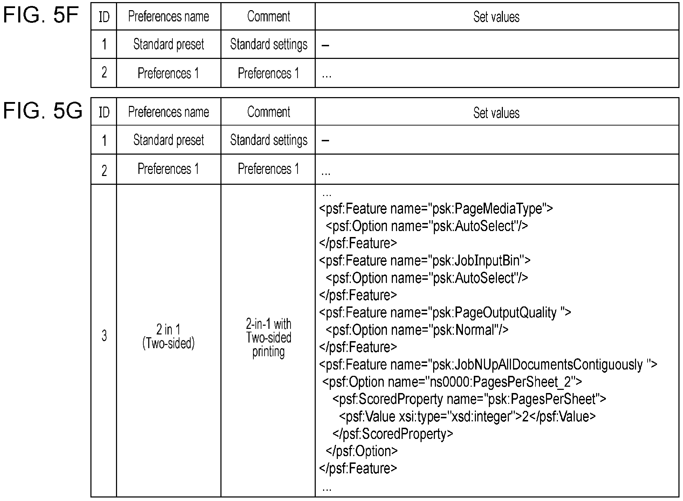

Figs. 5E and 5F illustrate examples of preferences management data according to the present embodiment.

Fig. 5E illustrates preferences management data stored in the shared information 2812 for the extension application A 2810 corresponding to the printing apparatus A 2802. Fig. 5F illustrates preferences management data stored in the shared information 2815 for the extension application B 2813 corresponding to the printing apparatus B 2804.

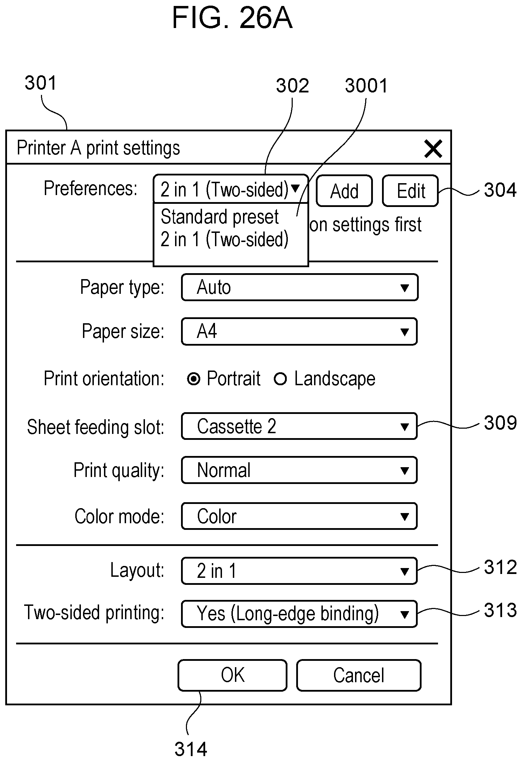

Fig. 26A illustrates an example in which the user clicks a combo box in the preferences 302 using the pointing device 117 on the print settings screen displayed by the print settings screen extension unit 2811 associated with the printer A as the printing apparatus A 2802. A list 3001 of preferences presets displays the preferences names in the preferences management data illustrated in Fig. 5E.

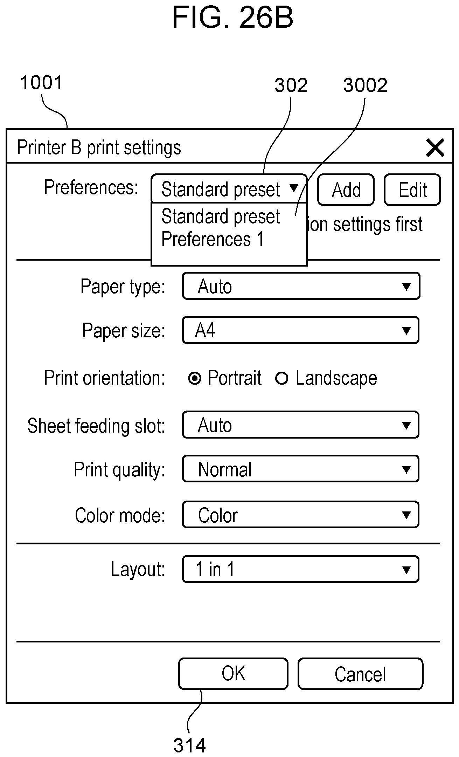

Fig. 26B illustrates an example in which the user clicks a combo box in the preferences 302 using the pointing device 117 on the print settings screen displayed by the print settings screen extension unit 2814 associated with the printer B as the printing apparatus B 2804. A list 3002 of preferences presets displays the preferences names in the preferences management data illustrated in Fig. 5F.

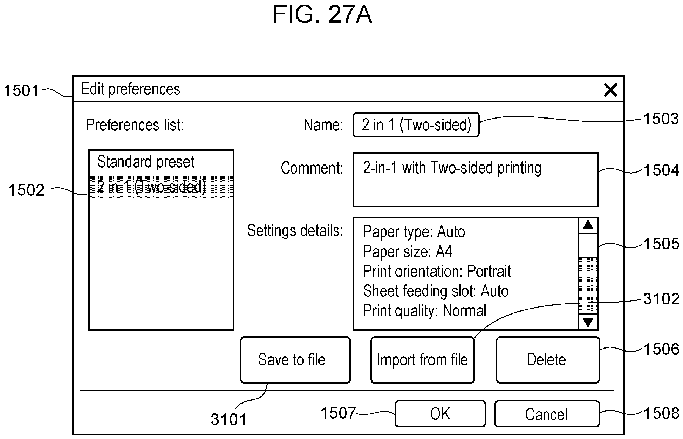

Fig. 27A illustrates an example of a preferences edit screen displayed when the preferences edit button 304 in Fig. 26A is pressed. In Fig. 27A, the preferences list 1502 displays the preferences names in the preferences management data illustrated in Fig. 5E, with the preferences preset 2 in 1 (Two-sided) selected by the user. Descriptions of the controls indicated by the same numerals in Figs. 14A and 14B are not repeated.

In the present embodiment, a button 3101 for storing the preferences preset selected in the preferences presets list 1502 in a file and a button 3102 for retrieving the stored preferences preset from the file.

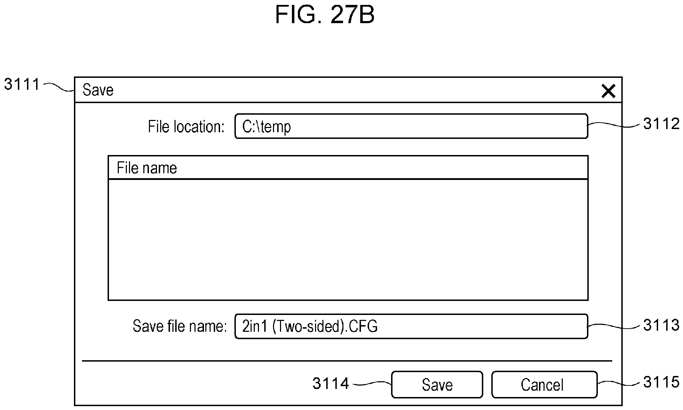

When the user presses the save to file button 3101, the print settings screen extension unit 2811 displays a preferences save screen 3111 illustrated in Fig. 27B. When the user presses the save button 3114 on the preferences save screen 3111, the print settings screen extension unit 2811 stores the preferences preset selected in the preferences list 1502. The preferences preset selected in the preferences list 1502 is stored with a save file name 3113 specified for a file location 3112. The print settings screen extension unit 2811 then closes the preferences save screen 3111.

When the user presses a cancel button 3115 on the preferences save screen 3111, the print settings screen extension unit 2811 closes the preferences save screen 3111 without performing any operation and returns to the preferences edit screen 1501.

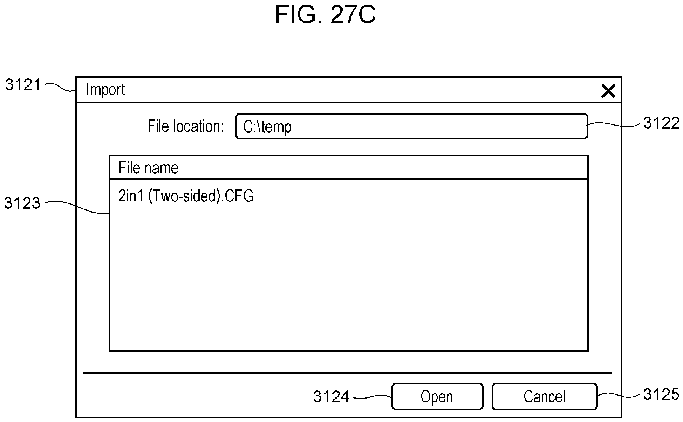

When the user presses the import from file button 3102, the print settings screen extension unit 2811 displays a preferences import screen 3121 illustrated in Fig. 27C. When an open button 3124 is pressed on the preferences import screen 3121, the print settings screen extension unit 2811 opens the file existing at the file location 3122 and adds the stored preferences preset to the preferences management data in the shared information A.

When the user presses a cancel button 3125 on the preferences import screen 3121, the print settings screen extension unit 2811 closes the preferences import screen 3121 without performing any operation and returns to the preferences edit screen 1501.

Figs. 27A, 27B, and 27C are described using the extension application A 2810 in Fig. 25A as an example. The extension application B 2813 in Fig. 25B performs the same operations.

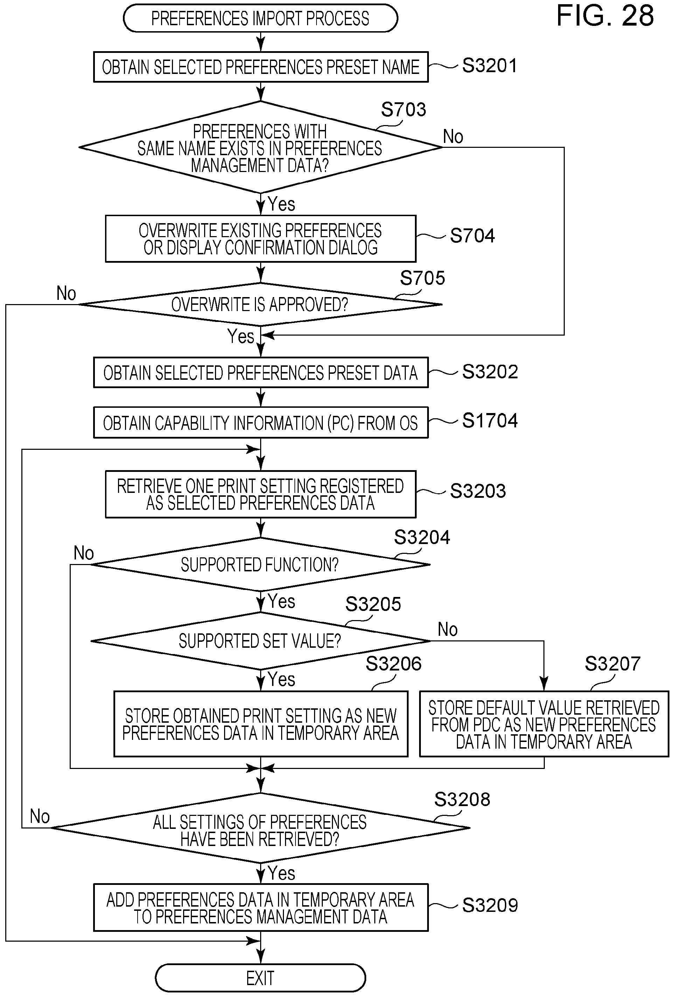

Fig. 28 illustrates a process flow executed by the print settings screen extension unit 2811 or 2814 when the user presses the open button 3124 on the preferences import screen 3121 in Fig. 27C. The same operations as in Figs. 7A, 7B, and 16 are indicated by the same numerals, and the descriptions thereof are not repeated. The detailed description is provided using as an example the case in which the process is executed using the extension application B 2813.

When the user presses the open button 3124 on the preferences import screen 3121, in S3201, the print settings screen extension unit 2814 obtains the preferences preset name specified on the preferences import screen 3121. The preferences preset name is the specified file name for a preferences preset. However, the preferences preset name may be stored with set values in advance and obtained.

Next, in S703, the print settings screen extension unit 2814 checks whether the preferences preset name obtained in S3201 exists in the preferences management data stored in the shared information B 2815. When the preferences preset name exists in the preferences management data, the print settings screen extension unit 2814 displays the overwrite confirmation dialog 621 in S704.

When the user presses the cancel button 624 in the overwrite confirmation dialog 621, the print settings screen extension unit 2814 determines No in S705 and ends the process. When the user presses the OK button 623 in the overwrite confirmation dialog 621 to provide an instruction to overwrite, or when no preferences preset of the same name exists in the preferences management data in S704, the print settings screen extension unit 2814 proceeds to the operation in S3202.

In S3202, the print settings screen extension unit 2814 obtains preferences preset data from the file specified on the preferences import screen 3121. Subsequently, in S3203, the print settings screen extension unit 2814 retrieves one of the print settings registered in the preferences preset data obtained in S3202.

Subsequently, the print settings screen extension unit 2814 determines in S3204 whether the setting in the preferences preset obtained in S3203 corresponds to a function (Feature) supported by the PC obtained in S1704. When it is determined in S3204 that the setting corresponds to a function supported by the PC, the print settings screen extension unit 2814 proceeds to S3205.

In S3205, the print settings screen extension unit 2814 determines whether the set value in the preferences preset obtained in S3203 is a set value (Option) supported by the PC. When it is determined that the set value in the preferences preset obtained in S3203 is a set value supported by the PC, the print settings screen extension unit 2814 proceeds to S3206.

In S3206, the print settings screen extension unit 2814 stores the set value in the preferences preset obtained in S3204 as new preferences data in the temporary area.

When the print settings screen extension unit 2814 determines in S3205 that the set value in the preferences preset obtained in S3203 is a set value not supported by the PC obtained in S1704, the print settings screen extension unit 2814 proceeds to S3207. In S3207, the print settings screen extension unit 2814 stores the default value of the set value, retrieved from the PDC, as new preferences data in the temporary area.

When it is determined in S3204 that the setting corresponds to a function not supported by the PC, or after the operation in S3206 or S3207 is performed, the print settings screen extension unit 2814 proceeds to S3208.

In S3208, the print settings screen extension unit 2814 determines whether all print settings registered in the preferences preset data obtained in S3202 have been retrieved. When not all settings have been retrieved, the print settings screen extension unit 2814 returns to the operation in S3203.

When it is determined in S3208 that all print settings registered in the preferences preset data obtained in S3202 have been retrieved, in S3209, the print settings screen extension unit 2814 stores in the preferences management data the preferences preset stored in the temporary area.

Fig. 5G illustrates an example of preferences management data after the extension application B 2813 having the preferences management data in Fig. 5F retrieves a preferences preset and adds the preferences preset.

The preferences preset 2 in 1 (Two-sided) in Fig. 5G is added through the following process. The preferences preset 2 in 1 (Two-sided), listed in Fig. 5E, is stored in a file using the preferences save screen 3111 of the extension application A 2810. The stored file of the preferences preset 2 in 1 (Two-sided) is read using the preferences import screen 3121 of the extension application B 2813, thereby obtaining the preferences management data in Fig. 5G.

In the present embodiment, the functions supported by the extension application B 2813 are implementable by the printer B and are supported by the PC in Fig. 10B. Among the settings for 2 in 1 (Two-sided) stored in Fig. 5G, the setting of cassette 2 (Cassette2) for the sheet feeding slot (JoblnputBin) stored in Fig. 5E is not supported by the extension application B 2813.

Accordingly, the setting is changed to Auto (AutoSelect), which is the default value for the sheet feeding slot in the extension application B 2813, and the setting of two-sided printing (JobDuplexAllDocumentsContiguously) is not stored.

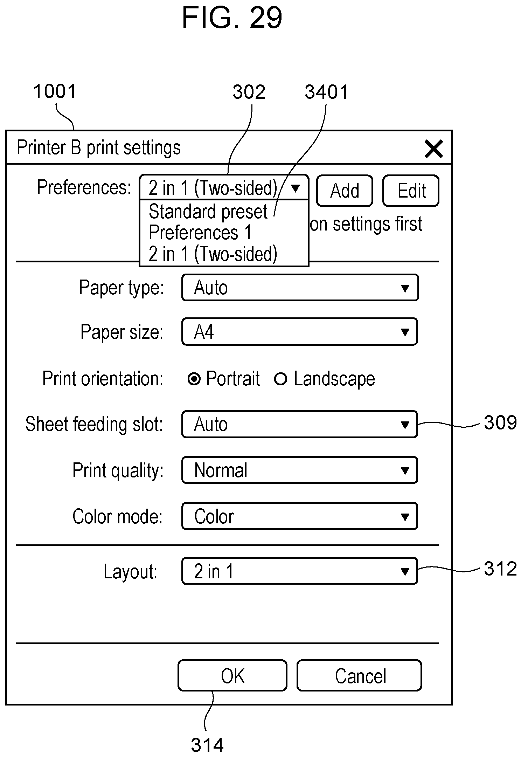

Fig. 29 illustrates an example in which the user clicks a combo box in the preferences 302 using the pointing device 117 on the print settings screen of the extension application B 2813 associated with the printer B as the printing apparatus B 2804.

A list 3401 of preferences presets displays the preferences presets in the preferences management data illustrated in Fig. 5G. The preferences preset 2 in 1 (Two-sided), added through the process described using Fig. 28, is additionally displayed compared to the print settings screen of the extension application B 2813 in Fig. 26B.

Fig. 29 illustrates the print settings screen in which 2 in 1 (Two-sided) added as the preferences 302 is selected, with Auto set as the sheet feeding slot 309 and 2 in 1 as the layout 312.

The storing and reading of preferences presets described in the present embodiment may be performed in other embodiments.

As described above, in the printing system according to the present embodiment, extension applications are associated with respective printing apparatuses, enabling the preferences presets for each printing apparatus to be used. This configuration prevents users from using unintended preferences presets, thereby improving usability. Additionally, this configuration enables the storing and reading of preferences presets, allowing other printing apparatuses to use the same preferences presets.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card.

While the present invention has been described with reference to embodiments, it is to be understood that the invention is not limited to the disclosed embodiments. The scope of the invention is defined by the scope of the claims.

## Claims

1. A control method of an information processing apparatus, wherein a standard driver and an application program are installed in the information processing apparatus, the application program supporting the standard driver which is able to generate print data printable by a plurality of printing apparatuses supplied from a plurality of manufacturers, the control method comprising:
storing a collection of set values for print settings items;
displaying a print settings screen that allows selection of the collection;
receiving selection of the collection by a user; and
applying the set values for the print settings items included in the selected collection on the print settings screen,
wherein the collection is displayed on the print settings screen using different display methods depending on whether the set values for the print settings items included in the collection include any set value that is not implementable by a printing apparatus associated with the print settings screen or the set values for the print settings items included in the collection does not include any set value that is not implementable by the printing apparatus associated with the print settings screen.

2. The control method according to claim 1, further comprising:
displaying a name of the collection on the print settings screen; and
changing a display method for displaying the collection on the print settings screen by attaching an object to a name of the collection, the object indicating that the set values for the print settings items included in the collection include any set value that is not implementable by a printing apparatus associated with the print settings screen.

3. The control method according to claim 1, further comprising:
displaying a name of the collection on the print settings screen; and
changing a display method for displaying the collection on the print settings screen by changing a background color of the name of the collection.

4. The control method according to claim 1,
wherein the storing includes storing settings details on the print settings screen as the collection.

5. The control method according to claim 1,
wherein the storing includes storing the collection in association with a type of the printing apparatus associated with the print settings screen.

6. The control method according to claim 5, further comprising:
when the type of the printing apparatus associated with the print settings screen differs from a type associated with the collection, changing a display method for displaying the collection on the print settings screen.

7. The control method according to claim 1,
wherein the storing includes storing the collection in association with a name of the printing apparatus associated with the print settings screen.

8. The control method according to claim 1, further comprising:
displaying a button for receiving an instruction to perform the storing of the collection on the print settings screen; and
in response to the button being pressed, displaying a screen to receive a name of the collection,
wherein the storing includes storing, as the collection, set values on the print settings screen when the button is pressed, in association with the name.

9. The control method according to claim 1, further comprising:
when the selected collection includes any set value that is not implementable by the printing apparatus associated with the print settings screen, applying a default value for a print settings item to which the non-implementable set value belongs.

10. The control method according to any one of claims 1 to 9, further comprising:
storing, for each printing apparatus, information of the collection that is usable by the printing apparatus; and
displaying on the print settings screen, in a selectable manner, the collection that is usable by the printing apparatus associated with the print settings screen.

11. The control method according to claim 1, further comprising:
outputting information of the collection; and
by reading the output collection using another application program that is different from the application program, the other application program supporting a functionality of the standard driver, displaying the collection in a selectable manner on a print settings screen displayed by the other application program.

12. The control method according to claim 1,
wherein the information processing apparatus includes a drawing application that outputs an image to be printed,
the control method further comprising:
when a print instruction is issued to the standard driver from the drawing application, activating the application program; and
receiving an instruction to prioritize a set value selected on the drawing application when receiving selection of the collection.

13. A non-transitory computer-readable storage medium storing an application program which causes an information processing apparatus to perform the control method according to any one of claims 1 to 12.

14. An information processing apparatus, wherein a standard driver and an application program are installed in the information processing apparatus, the application program supporting the standard driver which is able to generate print data printable by a plurality of printing apparatuses supplied from a plurality of manufacturers, the information processing apparatus comprising at least one processor operating to:
store a collection of set values for print settings items;
display a print settings screen that allows selection of the collection;
receive selection of the collection by a user;
apply the set values for the print settings items included in the selected collection on the print settings screen; and
display the collection on the print settings screen using different display methods depending on whether the set values for the print settings items included in the collection include any set value that is not implementable by a printing apparatus associated with the print settings screen or the set values for the print settings items included in the collection does not include any set value that is not implementable by the printing apparatus associated with the print settings screen.
